# EUROPEAN PATENT APPLICATION

(11) **EP 4 746 239 A1**
(43) Date of publication of application: **20.05.2026**
(21) Application number: 25176963.4
(22) Date of filing: 16.05.2025
(51) Int. Cl.: H02J 7/00, B60L 53/16, H02J 9/06, B60L 53/53, B60L 53/63, B60L 53/66, B60L 55/00, H02J 3/00

(54) **ELECTRIC VEHICLE POWER SUPPLY EQUIPMENT AND BATTERY BACKUP METHOD THEREOF, AND POWER BACKUP DEVICE**

(30) Priority: 15.11.2024 US 202463720762 P; 13.03.2025 CN 202520441337 U
(71) Applicant: Lite-On Technology Corporation, Taipei City 11492 (TW)
(72) Inventor: GUO, Yuan-Kai, 11492 Taipei (TW)
(74) Representative: Becker, Eberhard

(57) **Abstract**

An electric vehicle power supply equipment (100) and a battery backup method thereof, and a power backup device. The electric vehicle power supply equipment includes a battery (140), a protection circuit (110), a control circuit (120, 120a), a discharge circuit (160, 160a), an output switching circuit (170, 170a), a control pilot circuit (150) and an auxiliary discharge circuit (180, 180a). The protection circuit provides a power failure indication signal (Blackout) based on charging voltages (+VP1, -VP1). The control pilot circuit determines whether a charging gun (Gev) is connected to an electric vehicle (CARev) based on a pilot voltage (+CP_VP) to provide pilot information. The control circuit provides a discharge control signal (Discharge) based on the power failure indication signal and the pilot information. The discharge circuit, the output switching circuit, and the auxiliary discharge circuit convert a battery voltage (BAT_VP) into the pilot voltage or equipment voltages (+VP2, -VP2).

## Description

### BACKGROUND

### Technical Field

The disclosure relates to an electric vehicle power supply equipment, and in particular to an electric vehicle power supply equipment having a battery backup module, a battery backup method thereof, and a power backup device.

### Description of Related Art

In addition to charging an electric vehicle, bidirectional electric vehicle power supply equipment (EVSE, also referred to as a charging pile) may supply power to the power grid or a home using the power of the electric vehicle when a power outage occurs in the power grid. However, when a power outage occurs in the power grid, the electric vehicle power supply equipment loses its power source, causing the electric vehicle power supply equipment to be unable to operate, thereby preventing the electric vehicle power supply equipment from communicating with the electric vehicle and/or a user device.

### SUMMARY

The disclosure provides an electric vehicle power supply equipment and a battery backup method thereof. When a power outage of the power grid occurs or the electric vehicle is unable to provide reverse power supply, power is provided to a communication circuit of the electric vehicle power supply equipment to maintain the communication function of the electric vehicle power supply equipment.

An electric vehicle power supply equipment of the disclosure includes a battery, a protection circuit, a control circuit, a discharge circuit, an output switching circuit, a control pilot circuit, and an auxiliary discharge circuit. The battery has a positive battery terminal and a negative battery terminal. The protection circuit receives a positive charging voltage and a negative charging voltage to provide a power failure indication signal based on the positive charging voltage and the negative charging voltage. The control circuit is coupled to the protection circuit to receive the power failure indication signal and provide a discharge control signal based on the power failure indication signal and a pilot information. The discharge circuit is coupled to the control circuit, the positive battery terminal, and the negative battery terminal and receives the discharge control signal to convert a battery voltage of the battery into an output voltage based on the discharge control signal. The output switching circuit is coupled to the control circuit and the discharge circuit to receive a supply target signal from the control circuit and receive the output voltage from the discharge circuit. The output switching circuit provides the output voltage as a pilot voltage or a positive equipment voltage based on the supply target signal. The control pilot circuit is coupled to the control circuit and the output switching circuit to receive the pilot voltage and determine whether a charging gun is connected to an electric vehicle based on the pilot voltage so as to provide the pilot information to the control circuit. The auxiliary discharge circuit is coupled to the output switching circuit to receive the positive equipment voltage and provide a negative equipment voltage. The positive charging voltage and the negative charging voltage are received from a power supply conversion circuit or the connected electric vehicle.

A battery backup method of an electric vehicle power supply equipment of the disclosure includes the following steps. A power failure indication signal is provided through a protection circuit of the electric vehicle power supply equipment based on a positive charging voltage and a negative charging voltage. A discharge control signal is provided through a control circuit of the electric vehicle power supply equipment based on the power failure indication signal and a pilot information. A battery voltage of a battery is converted into an output voltage through a discharge circuit of the electric vehicle power supply equipment based on the discharge control signal, the discharge circuit being coupled to the battery. The output voltage is provided as a pilot voltage or a positive equipment voltage through an output switching circuit of the electric vehicle power supply equipment based on a supply target signal from the control circuit. Whether a charging gun is connected to an electric vehicle is determined based on the pilot voltage through a control pilot circuit of the electric vehicle power supply equipment to provide the pilot information. A negative equipment voltage is provided based on the positive equipment voltage through an auxiliary discharge circuit of the electric vehicle power supply equipment. The positive charging voltage and the negative charging voltage are received from a power supply conversion circuit or the connected electric vehicle.

A power backup device of the disclosure includes a battery module, a power supply conversion circuit, an output circuit, and a control circuit. The power supply conversion circuit is electrically connected to the battery module. The output circuit is electrically connected to the power supply conversion circuit. The control circuit is electrically connected to the battery module, the power supply conversion circuit, and the output circuit. The control circuit receives an external status indication signal to control the battery module to discharge or control the power supply conversion circuit to charge the battery module.

Based on the above, in the electric vehicle power supply equipment and the battery backup method, as well as the power backup device of the embodiments, the protection circuit provides a power failure indication signal based on the positive charging voltage and the negative charging voltage. The control pilot circuit determines whether the charging gun is connected to the electric vehicle based on the pilot voltage to provide the pilot information. The control circuit provides the discharge control signal based on the power failure indication signal and the pilot information. Therefore, when the protection circuit indicates through the power failure indication signal that the positive charging voltage and the negative charging voltage are not received and the control pilot circuit indicates through the pilot information that the charging gun is connected to the electric vehicle, the battery voltage is converted into the positive equipment voltage and the negative equipment voltage to supply power to a communication circuit of the electric vehicle power supply equipment, thereby maintaining the communication function of the electric vehicle power supply equipment.

To make the features and advantages of the disclosure more comprehensible, several embodiments accompanied with drawings are described in detail as follows.

### BRIEF DESCRIPTION OF THE DRAWINGS

FIG. 1 is a circuit schematic diagram of the electric vehicle power supply equipment according to an embodiment of the disclosure.
FIG. 2 is a circuit schematic diagram of a charging circuit according to an embodiment of the disclosure.
FIG. 3 is a circuit schematic diagram of a discharge circuit and an output switching circuit according to an embodiment of the disclosure.
FIG. 4 is a circuit schematic diagram of an auxiliary discharge circuit according to an embodiment of the disclosure.
FIG. 5 is a circuit schematic diagram of a control circuit according to an embodiment of the disclosure.
FIG. 6 is a circuit schematic diagram of a monitoring circuit according to an embodiment of the disclosure.
FIG. 7 is a flowchart of a battery backup method of the electric vehicle power supply equipment according to an embodiment of the disclosure.

### DESCRIPTION OF THE EMBODIMENTS

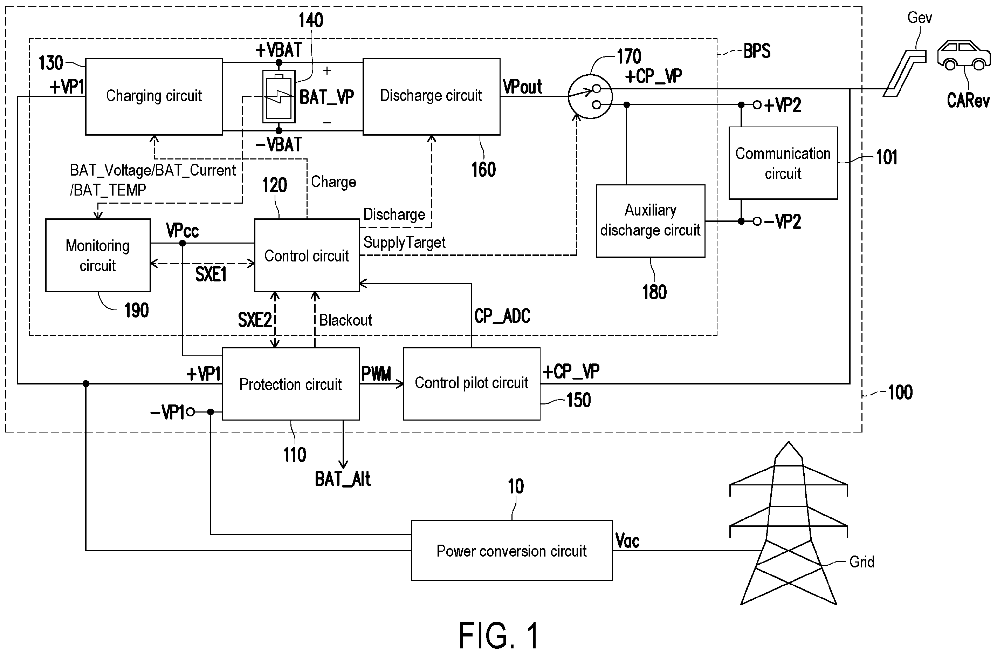

FIG. 1 is a circuit schematic diagram of the electric vehicle power supply equipment according to an embodiment of the disclosure. Referring to FIG. 1, in this embodiment, an electric vehicle power supply equipment 100 includes, for example, a communication circuit 101, a protection circuit 110, a control circuit 120, a charging circuit 130, a battery (or a battery module) 140, a control pilot circuit 150, a discharge circuit 160, an output switching circuit 170, an auxiliary discharge circuit 180, and a monitoring circuit 190. The control circuit 120, the charging circuit 130, the battery 140, the discharge circuit 160, the output switching circuit 170, the auxiliary discharge circuit 180, and the monitoring circuit 190 form a battery backup system/solution BPS. The protection circuit 110, the control circuit 120, and the control pilot circuit 150 may receive a circuit power supply voltage VPcc (e.g., +5 volts) for operation.

The battery 140 has a positive battery terminal +VBAT and a negative battery terminal -VBAT and has a battery voltage BAT_VP. The protection circuit 110 receives a positive charging voltage +VP1 (e.g., +12 volts) and a negative charging voltage -VP1 (e.g., -12 volts) provided from a power supply conversion circuit 10 or a connected electric vehicle CARev. A power failure indication signal Blackout is provided based on the positive charging voltage +VP1 and the negative charging voltage -VP1. The power supply conversion circuit 10 is used to convert an alternating current Vac (e.g., 240 volts) transmitted/provided by a power grid Grid into the positive charging voltage +VP1 and the negative charging voltage -VP1.

The control circuit 120 is coupled to the protection circuit 110 and the control pilot circuit 150 to receive the power failure indication signal Blackout and a pilot signal CP_ADC and provide a discharge control signal Discharge based on the power failure indication signal Blackout and the pilot signal CP_ADC. The discharge circuit 160 is coupled to the control circuit 120, the positive battery terminal +VBAT, and the negative battery terminal -VBAT and receives the discharge control signal Discharge to convert the battery voltage BAT_VP of the battery 140 into an output voltage VPout (e.g., +12 volts) based on the discharge control signal Discharge.

The output switching circuit 170 is coupled to the control circuit 120 and the discharge circuit 160 to receive a supply target signal SupplyTarget from the control circuit 120 and receive an output voltage VPout from the discharge circuit 160. The output switching circuit 170 provides the output voltage VPout as a pilot voltage +CP_VP by default or switches to provide a positive equipment voltage +VP2 based on the supply target signal SupplyTarget. The pilot voltage +CP_VP is provided to the electric vehicle CARev when a charging gun Gev is connected to the electric vehicle CARev, causing the voltage level of the pilot voltage +CP_VP to drop. Therefore, a change in the voltage level of the pilot voltage +CP_VP reflects the connection between the charging gun Gev and the electric vehicle CARev.

The control pilot circuit 150 is coupled to the protection circuit 110, the control circuit 120, and the output switching circuit 170 and receives a pulse width modulation signal PWM provided by the protection circuit 110 to operate based on the pulse width modulation signal PWM. The control pilot circuit 150 also receives the pilot voltage +CP_VP from the output switching circuit 170 and determines whether the charging gun Gev is connected to the electric vehicle CARev based on the pilot voltage +CP_VP to correspondingly provide a pilot signal CP_ADC to transmit pilot information to the control circuit 120.

Then, the control circuit 120 correspondingly provides the supply target signal SupplyTarget based on the pilot information transmitted by the pilot signal CP_ADC to control the output switching circuit 170 to provide the pilot voltage +CP_VP for determining the connection between the charging gun Gev and the electric vehicle CARev. After the charging gun Gev is connected to the electric vehicle CARev, the output switching circuit 170 provides the positive equipment voltage +VP2.

The auxiliary discharge circuit 180 is coupled to the output switching circuit 170 and is used to receive the positive equipment voltage +VP2 (e.g., +12 volts) and provide a negative equipment voltage -VP2 (e.g., -12 volts) based on the positive equipment voltage +VP2. The positive equipment voltage +VP2 and the negative equipment voltage -VP2 may be provided to the communication circuit 101 to activate the communication function of the electric vehicle power supply equipment (EVSE).

Based on the above, when a power outage occurs in the power grid Grid, the battery backup system/solution BPS may temporarily provide at least power to the communication circuit 101 of the electric vehicle power supply equipment 100 to maintain the communication function of the electric vehicle power supply equipment 100.

In the embodiment of the disclosure, the battery 140 provides the pilot voltage +CP_VP through the supply target signal SupplyTarget to determine whether the charging gun Gev is connected to the electric vehicle CARev. This state may prevent excessive power consumption of the battery 140. After the charging gun Gev is connected to the electric vehicle CARev, the pilot voltage +CP_VP may drop from +12 volts (corresponding to a power level) to +9 volts (corresponding to a predetermined level). In other words, when the pilot voltage +CP_VP drops from the power level to the predetermined level, the control pilot circuit 150 determines that the charging gun is connected to the electric vehicle CARev. When the pilot voltage +CP_VP remains at the power level, the control pilot circuit 150 determines that the charging gun is not connected to the electric vehicle CARev.

In the embodiment of the disclosure, the communication circuit 101 may be an independent element or may be integrated into other components depending on circuit design. The embodiment of the disclosure is not limited thereto.

In this embodiment, the control circuit 120 may provide a charging control signal Charge based on the power failure indication signal Blackout. The charging circuit 130 is coupled to the positive battery terminal +VBAT and the negative battery terminal -VBAT and is further coupled to the control circuit 120 to receive the charging control signal Charge. The charging circuit 130 further receives the positive charging voltage +VP1 from the power supply conversion circuit 10 (or the electric vehicle CARev). The charging circuit 130 charges the battery 140 using the positive charging voltage +VP1 based on the charging control signal Charge.

In this embodiment, when the power failure indication signal Blackout indicates that the protection circuit 110 does not receive the positive charging voltage +VP1 and the negative charging voltage -VP1 and the pilot signal CP_ADC indicates that the charging gun Gev is connected to the electric vehicle CARev, the control circuit 120 provides the discharge control signal Discharge. Conversely, when the power failure indication signal Blackout indicates that the protection circuit 110 receives the positive charging voltage +VP1 and the negative charging voltage -VP1, the control circuit 120 provides the charging control signal Charge. In other words, when the power grid Grid is supplying power or when the electric vehicle CARev is supplying power in reverse, the control circuit 120 receives a power-present power failure indication signal Blackout from the protection circuit 110. At this time, the control circuit 120 may drive the charging circuit 130 to start charging the battery 140.

In this embodiment, the monitoring circuit 190 may monitor the voltage, charge-discharge current, temperature, battery capacity, and battery health status information of the battery 140. If the battery health status is low, information is transmitted back to remind the user to replace the battery 140. Further, the monitoring circuit 190 is coupled to the battery 140 and the control circuit 120 to monitor the battery voltage BAT_VP, the charge-discharge current, the battery temperature, the battery capacity, and the battery health status information of the battery 140. The battery capacity and the battery health status information may be calculated based on the battery voltage BAT_VP, the charge-discharge current, and the battery temperature. When the battery health status information indicates that the battery 140 has a low health status, the battery health status information is transmitted to the protection circuit 110 through the control circuit 120 to send a battery warning signal BAT_Alt through the protection circuit 110 to at least one of a user device (not shown) and the electric vehicle CARev.

In the embodiment of the disclosure, the battery voltage BAT_VP may be sensed/transmitted through a battery voltage signal BAT_Voltage, the charge-discharge current of the battery 140 may be sensed/transmitted through a battery current signal BAT_Current, and the battery temperature of the battery 140 may be sensed/transmitted through a battery temperature signal BAT_TEMP. However, the embodiment of the disclosure is not limited thereto.

In the embodiment of the disclosure, the monitoring circuit 190 transmits the battery health status information to the control circuit 120 through a first serial communication signal SXE1, and the control circuit 120 transmits the battery health status information to the protection circuit 110 through a second serial communication signal SXE2.

In the embodiment of the disclosure, the first serial communication signal SXE1 includes an inter-integrated circuit (I2C) signal, and the second serial communication signal SXE2 includes a universal asynchronous receiver-transmitter (UART) signal.

In the embodiment of the disclosure, the battery backup system/solution BPS, that is, the power backup device, includes at least the control circuit 120, the battery (or battery module) 140, the power supply conversion circuit (e.g., the charging circuit 130 and the discharge circuit 160), and the output circuit (e.g., the output switching circuit 170 and the auxiliary discharge circuit 180).

The power supply conversion circuit (i.e., the charging circuit 130 and the discharge circuit 160) is electrically connected to the battery (or battery module) 140. The output circuit (i.e., the output switching circuit 170, the auxiliary discharge circuit 180, and an output path electrically connected to the electric vehicle CARev) is electrically connected to the power supply conversion circuit (i.e., the charging circuit 130 and the discharge circuit 160). The control circuit 120 is electrically connected to the battery (or battery module) 140, the power supply conversion circuit (i.e., the charging circuit 130 and the discharge circuit 160), and the output circuit (i.e., the output switching circuit 170, the auxiliary discharge circuit 180, and the output path electrically connected to the electric vehicle CARev).

The control circuit 120 receives an external status indication signal (e.g., the power failure indication signal Blackout) from the battery backup system/solution BPS, that is, the power backup device, to control the battery (or battery module) 140 to discharge or to control the charging circuit 130 in the power supply conversion circuit to charge the battery (or battery module) 140.

The charging circuit 130 (corresponding to the first power converter) and the discharge circuit 160 (corresponding to the second power converter) are electrically connected to the battery (or battery module) 140 and the control circuit 120. When the status indication signal (i.e., the power failure indication signal Blackout) indicates that the protection circuit 110 receives the positive charging voltage +VP1 and the negative charging voltage -VP1 (corresponding to the first state), the charging circuit 130 (corresponding to the first power converter) receives the positive charging voltage +VP1 (corresponding to the first power supply) and charges the battery (or battery module) 140. When the status indication signal (i.e., the power failure indication signal Blackout) indicates that the protection circuit 110 does not receive the positive charging voltage +VP1 and the negative charging voltage -VP1 (corresponding to the second state), the battery (or battery module) 140 discharges to the discharge circuit 160 (corresponding to the second power converter).

The output switching circuit 170 (corresponding to the selection circuit) is electrically connected to the discharge circuit 160 (corresponding to the second power converter). When the status indication signal (i.e., the power failure indication signal Blackout) indicates the second state (that is, the protection circuit 110 does not receive the positive charging voltage +VP1 and the negative charging voltage -VP1), the output switching circuit 170 (corresponding to the selection circuit) electrically connects the discharge circuit 160 to an output path providing the pilot voltage +CP_VP (corresponding to the first output path) and determines whether the output switching circuit 170 in the output circuit is electrically connected to the electric vehicle CARev (corresponding to the load). When the output switching circuit 170 in the output circuit is electrically connected to the electric vehicle CARev (corresponding to the load), the output switching circuit 170 (corresponding to the selection circuit) electrically connects the discharge circuit 160 to an output path providing the positive equipment voltage +VP2 and the negative equipment voltage -VP2 (corresponding to the second output path), and the positive equipment voltage +VP2 and the negative equipment voltage -VP2 may be provided to the electric vehicle CARev (corresponding to the load) as power.

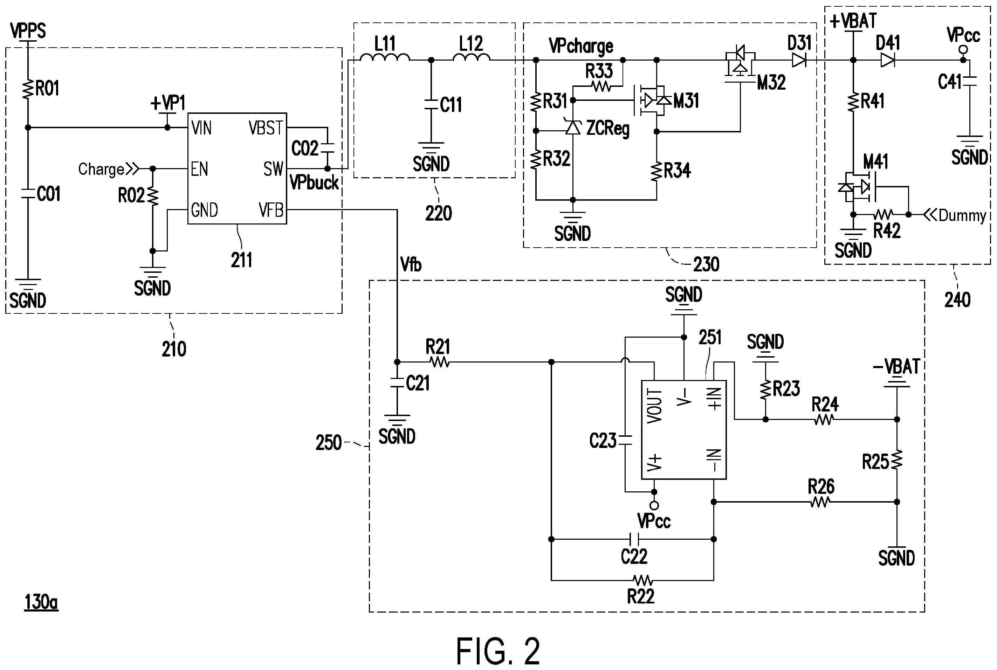

FIG. 2 is a circuit schematic diagram of a charging circuit according to an embodiment of the disclosure. Referring to FIGs. 1 and 2, in this embodiment, the charging circuit 130 is, for example, a charging circuit 130a. The charging circuit 130a includes, for example, a buck conversion circuit 210, a filter circuit 220, an overvoltage protection circuit 230, a virtual load circuit 240, and a feedback circuit 250.

The buck conversion circuit 210 receives the positive charging voltage +VP1, a charging control signal Charge, and a feedback voltage Vfb. The buck conversion circuit 210 is activated based on the charging control signal Charge and converts the positive charging voltage +VP1 based on the feedback voltage Vfb to provide a buck power supply voltage VPbuck. The filter circuit 220 is coupled to the buck conversion circuit 210 to receive the buck power supply voltage VPbuck and provides a charging power supply voltage VPcharge after performing filtering.

The feedback circuit 250 is coupled to the negative battery terminal -VBAT and the buck conversion circuit 210 to provide the feedback voltage Vfb. The overvoltage protection circuit 230 is coupled between the filter circuit 220 and the positive battery terminal +VBAT to connect and disconnect the charging power supply voltage VPcharge and the positive battery terminal +VBAT based on the charging power supply voltage VPcharge. The virtual load circuit 240 is coupled to the positive battery terminal +VBAT and receives a virtual load signal Dummy from the control circuit 120 to discharge the battery 140 in response to the virtual load signal Dummy.

In this embodiment, the buck conversion circuit 210 includes, for example, a buck circuit chip 211, resistors R01 and R02, and capacitors C01 and C02. The buck circuit chip 211 has a power voltage input terminal VIN (corresponding to a first power voltage input terminal) receiving the positive charging voltage +VP1, an enable input terminal EN (corresponding to a first enable input terminal) receiving the charging control signal Charge, a bootstrap terminal VBST (corresponding to a first bootstrap terminal), a switch node terminal SW (corresponding to a first switch node terminal) providing the buck power supply voltage VPbuck, a buck feedback terminal VFB receiving the feedback voltage Vfb, and a ground terminal GND coupled to a ground voltage SGND.

The resistor R01 (corresponding to the first resistor) is coupled between a system power supply voltage VPPS (e.g., +12 volts) and the power voltage input terminal VIN of the buck circuit chip 211. The capacitor C01 (corresponding to the first capacitor) is coupled between the power voltage input terminal VIN of the buck circuit chip 211 and the ground voltage SGND. The resistor R02 (corresponding to the second resistor) is coupled between the enable input terminal EN of the buck circuit chip 211 and the ground voltage SGND. The capacitor C02 (corresponding to the second capacitor) is coupled between the bootstrap terminal VBST of the buck circuit chip 211 and the switch node terminal SW of the buck circuit chip 211. Accordingly, the buck conversion circuit 210 steps down the positive charging voltage +VP1 through the buck circuit chip 211.

In this embodiment, the filter circuit 220 includes, for example, inductors L11 and L12, and a capacitor C11. The inductor L11 (corresponding to the first inductor) and the inductor L12 (corresponding to the second inductor) are connected in series between the buck power supply voltage VPbuck and the charging power supply voltage VPcharge. The capacitor C11 (corresponding to the third capacitor) is coupled between a connection point of the inductor L11 and the inductor L12 and the ground voltage SGND.

In this embodiment, the feedback circuit 250 includes, for example, a differential amplifier chip 251, resistors R21 to R26, and capacitors C21 to C22. The differential amplifier chip 251 has an output terminal VOUT, a positive input terminal +IN, a negative input terminal - IN, a positive power terminal V+ receiving a circuit power supply voltage VPcc, and a negative power terminal V- coupled to the ground voltage SGND.

The resistor R21 (corresponding to the third resistor) is coupled between the feedback voltage Vfb and the output terminal VOUT. The capacitor C21 (corresponding to the fourth capacitor) is coupled between the output terminal VOUT and the ground voltage SGND. The resistor R22 (corresponding to the fourth resistor) is coupled between the output terminal VOUT and the negative input terminal -IN. The capacitor C22 (corresponding to the fifth capacitor) is coupled between the output terminal VOUT and the negative input terminal -IN. The resistor R23 (corresponding to the fifth resistor) is coupled between the positive input terminal +IN and the ground voltage SGND. The resistor R24 (corresponding to the sixth resistor) is coupled between the positive input terminal +IN and the negative battery terminal -VBAT. The resistor R25 (corresponding to the seventh resistor) is coupled between the negative battery terminal - VBAT and the ground voltage SGND. The resistor R26 (corresponding to the eighth resistor) is coupled between the negative input terminal -IN and the ground voltage SGND. Here, the feedback circuit 250 is used to design a constant current charging mode to maintain a stable charging current of the battery 140.

In this embodiment, the overvoltage protection circuit 230 includes, for example, a zener shunt regulator DCReg, resistors R31 to R34, transistors M31 and M32, and a diode D31. The zener shunt regulator DCReg has an anode coupled to the ground voltage SGND, a cathode, and a reference terminal. The resistor R31 (corresponding to the ninth resistor) is coupled between the charging power supply voltage VPcharge and the reference terminal of the zener shunt regulator DCReg. The resistor R32 (corresponding to the tenth resistor) is coupled between the reference terminal of the zener shunt regulator DCReg and the ground voltage SGND. The resistor R33 (corresponding to the eleventh resistor) is coupled between the charging power supply voltage VPcharge and the cathode of the zener shunt regulator DCReg. The transistor M31 (corresponding to the first transistor) has a first terminal receiving the charging power supply voltage VPcharge, a control terminal coupled to the cathode of the zener shunt regulator DCReg, and a second terminal. The transistor M32 (corresponding to the second transistor) has a first terminal receiving the charging power supply voltage VPcharge, a control terminal coupled to the second terminal of the transistor M31, and a second terminal. The resistor R34 (corresponding to the twelfth resistor) is coupled between the second terminal of the transistor M31 and the ground voltage SGND. The diode D31 (corresponding to the first diode) has an anode coupled to the second terminal of the transistor M31 and a cathode coupled to the positive battery terminal +VBAT. Through the overvoltage protection circuit 230, when the battery 140 is removed or the battery 140 is not properly installed, the charging power supply voltage VPcharge increases. At this time, the overvoltage protection circuit 230 disconnects to protect the circuit components.

In this embodiment, the virtual load circuit 240 includes, for example, a diode D41, a transistor M41, resistors R41 and R42, and a capacitor C41. The diode D41 (corresponding to the second diode) has an anode coupled to the positive battery terminal +VBAT and a cathode receiving a circuit power supply voltage VPcc. The transistor M41 (corresponding to the third transistor) has a first terminal, a control terminal receiving a virtual load signal Dummy, and a second terminal receiving a ground voltage SGND. The resistor R41 (corresponding to the thirteenth resistor) is coupled between the positive battery terminal +VBAT and the first terminal of the transistor M41. The resistor R42 (corresponding to the fourteenth resistor) is coupled between the ground voltage SGND and the control terminal of the transistor M41. The capacitor C41 (corresponding to the sixth capacitor) is coupled between the circuit power supply voltage VPcc and the ground voltage SGND. Through the virtual load circuit 240, when the health status of the battery 140 is monitored, the virtual load circuit 240 is activated to discharge the battery 140 to estimate the capacity of the battery 140.

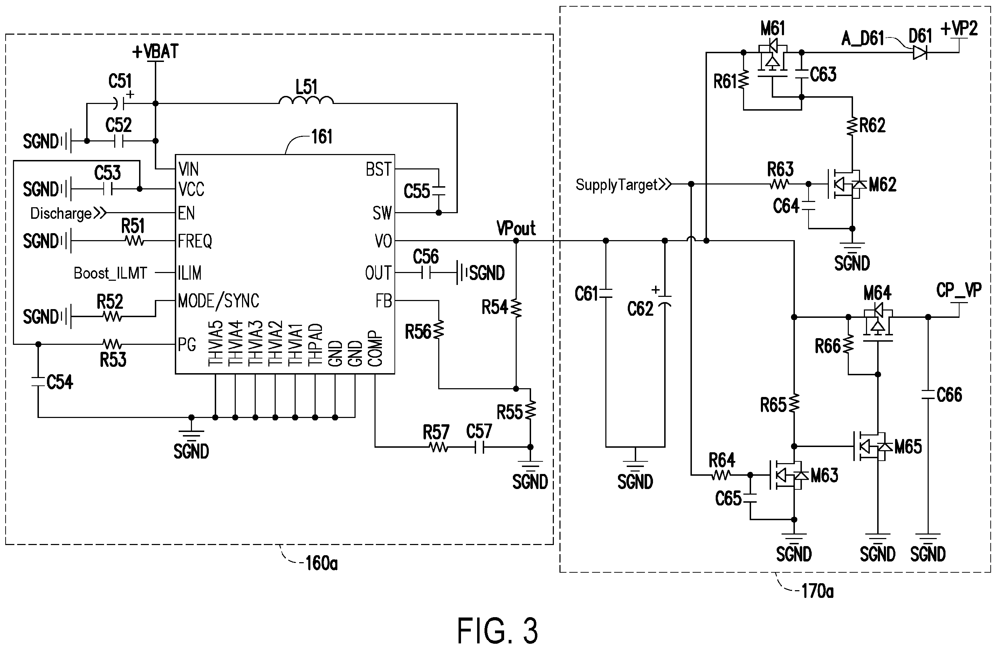

FIG. 3 is a circuit schematic diagram of a discharge circuit and an output switching circuit according to an embodiment of the disclosure. Referring to FIGs. 1 and 3, in this embodiment, the discharge circuit 160 is, for example, a discharge circuit 160a. The discharge circuit 160a includes, for example, a boost circuit chip 161, capacitors C51 to C57, an inductor L51, and resistors R51 to R57.

The boost circuit chip 161 has a power voltage input terminal VIN (corresponding to the second power voltage input terminal) coupled to the positive battery terminal +VBAT, a power input terminal VCC, an enable input terminal EN (corresponding to the second enable input terminal) receiving a discharge control signal Discharge, a switching frequency terminal FREQ, a current limit terminal ILIM receiving a bootstrap current limiting signal Boost_ILMT, a mode/synchronization terminal MODE/SYNC, an output power normal terminal PG, thermal pad terminals THVIA1 to THVIA5 and THPAD, a ground terminal GND coupled to a ground voltage SGND, a bootstrap terminal BST (corresponding to the second bootstrap terminal), a switch node terminal SW (corresponding to the second switch node terminal), a voltage output terminal VO providing an output voltage VPout, an external coupling terminal OUT, a boost feedback terminal FB, and a voltage comparison terminal COMP (corresponding to the first voltage comparison terminal).

The capacitor C51 (corresponding to the seventh capacitor) is coupled between the positive battery terminal +VBAT and the ground voltage SGND. The capacitor C52 (corresponding to the eighth capacitor) is coupled between the positive battery terminal +VBAT and the ground voltage SGND, wherein the type of the capacitor C51 is, for example, different from the type of the capacitor C52. The capacitor C53 is coupled between the power input terminal VCC and the ground voltage SGND. The resistor R51 is coupled between the switching frequency terminal FREQ and the ground voltage SGND. The resistor R52 is coupled between the mode/synchronization terminal MODE/SYNC and the ground voltage SGND. The resistor R53 is coupled between the power input terminal VCC and the output power normal terminal PG. The capacitor C54 is coupled between the power input terminal VCC and the ground voltage SGND.

The capacitor C55 (corresponding to the ninth capacitor) is coupled between the bootstrap terminal BST of the boost circuit chip 161 and the switch node terminal SW of the boost circuit chip 161. The inductor L51 (corresponding to the third inductor) is coupled between the positive battery terminal +VBAT and the switch node terminal SW of the boost circuit chip 161. The resistor R54 (corresponding to the fifteenth resistor) and the resistor R55 (corresponding to the sixteenth resistor) are connected in series between the output voltage VPout and the ground voltage SGND. The resistor R56 (corresponding to the seventeenth resistor) is coupled between the boost feedback terminal FB and a connection point between the fifteenth resistor R54 and the sixteenth resistor R55. The capacitor C54 (corresponding to the tenth capacitor) and the resistor R57 (corresponding to the eighteenth resistor) are connected in series between the voltage comparison terminal COMP of the boost circuit chip 161 and the ground voltage SGND.

In this embodiment, the output switching circuit 170 is, for example, an output switching circuit 170a. The output switching circuit 170a includes, for example, capacitors C61 to C66, transistors M61 to M65, a diode D61, and resistors R61 to R66. The capacitor C61 (corresponding to the eleventh capacitor) is coupled between the output voltage VPout and the ground voltage SGND. The capacitor C62 (corresponding to the twelfth capacitor) is coupled between the output voltage VPout and the ground voltage SGND, wherein the type of the capacitor C61 is, for example, different from the type of the capacitor C62.

The transistor M61 (corresponding to the fourth transistor) has a first terminal receiving the output voltage VPout, a control terminal, and a second terminal. The resistor R61 (corresponding to the nineteenth resistor) is coupled between the first terminal of the transistor M61 and the control terminal of the transistor M61. The capacitor C63 (corresponding to the thirteenth capacitor) is coupled between the second terminal of the transistor M61 and the control terminal of the transistor M61. The diode D61 (corresponding to the third diode) has an anode A_D61 coupled to the second terminal of the transistor M61 and a cathode providing the positive equipment voltage +VP2.

The transistor M62 (corresponding to the fifth transistor) has a first terminal, a control terminal, and a second terminal coupled to the ground voltage SGND. The resistor R62 (corresponding to the twentieth resistor) is coupled between the control terminal of the transistor M61 and the first terminal of the transistor M62. The resistor R63 (corresponding to the twenty-first resistor) is coupled between the supply target signal SupplyTarget and the control terminal of the transistor M62. The capacitor C64 (corresponding to the fourteenth capacitor) is coupled between the control terminal of the transistor M62 and the second terminal of the transistor M62.

The transistor M63 (corresponding to the sixth transistor) has a first terminal, a control terminal, and a second terminal coupled to the ground voltage SGND. The resistor R64 (corresponding to the twenty-second resistor) is coupled between the supply target signal SupplyTarget and the control terminal of the transistor M63. The resistor R65 (corresponding to the twenty-third resistor) is coupled between the output voltage VPout and the first terminal of the transistor M63. The capacitor C65 (corresponding to the fifteenth capacitor) is coupled between the control terminal of the transistor M63 and the second terminal of the transistor M63.

The transistor M64 (corresponding to the seventh transistor) has a first terminal receiving the output voltage VPout, a control terminal, and a second terminal providing the pilot voltage +CP_VP. The resistor R66 (corresponding to the twenty-fourth resistor) is coupled between the first terminal of the transistor M64 and the control terminal of the transistor M64. The capacitor C66 (corresponding to the sixteenth capacitor) is coupled between the second terminal of the transistor M64 and the ground voltage SGND. The transistor M65 (corresponding to the eighth transistor) has a first terminal coupled to the control terminal of the transistor M64, a control terminal coupled to the first terminal of the transistor M64, and a second terminal coupled to the ground voltage SGND.

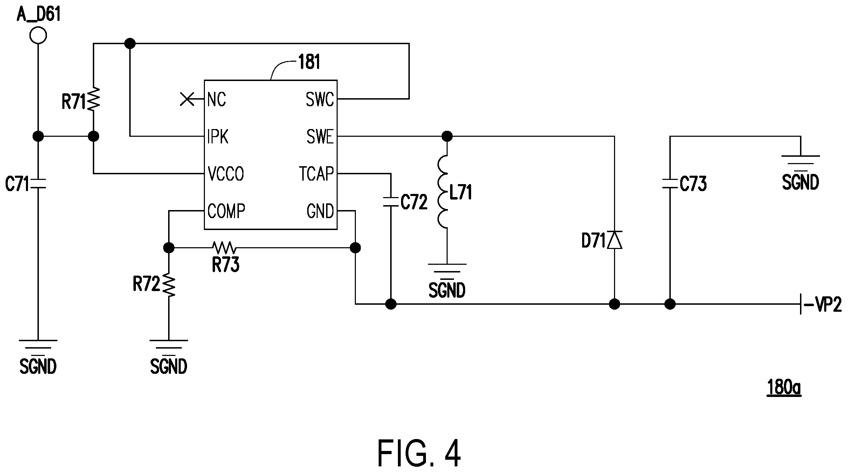

FIG. 4 is a schematic circuit diagram illustrating the auxiliary discharge circuit according to an embodiment of the disclosure. Referring to FIGs. 1, 3, and 4, in this embodiment, the auxiliary discharge circuit 180 is exemplified as the auxiliary discharge circuit 180a, and the auxiliary discharge circuit 180a includes a buck-boost circuit chip 181, capacitors C71 to C73, resistors R71 to R73, an inductor L71, and a diode D71. The buck-boost circuit chip 181 has an unconnected terminal NC, a current limiting sensing input terminal IPK, an internal voltage regulation output terminal VCCO coupled to the anode A_D61 of the diode D61, a voltage comparison terminal COMP (corresponding to the second voltage comparison terminal), an internal switch collector terminal SWC coupled to the current limiting sensing input terminal IPK, an internal switch emitter terminal SWE, a timing capacitor terminal TCAP, and a ground terminal GND coupled to the ground voltage SGND.

The capacitor C71 (corresponding to the seventeenth capacitor) is coupled between the anode A_D61 of the diode D61 and the ground voltage SGND. The resistor R71 (corresponding to the twenty-fifth resistor) is coupled between the anode A_D61 of the diode D61 and the current limiting sensing input terminal IPK. The resistor R72 (corresponding to the twenty-sixth resistor) is coupled between the voltage comparison terminal COMP of the buck-boost circuit chip 181 and the ground voltage SGND. The resistor R73 (corresponding to the twenty-seventh resistor) is coupled between the voltage comparison terminal COMP of the buck-boost circuit chip 181 and the negative equipment voltage -VP2.

The capacitor C72 (corresponding to the eighteenth capacitor) is coupled between the timing capacitor terminal TCAP and the negative equipment voltage -VP2. The inductor L71 (corresponding to the fourth inductor) is coupled between the internal switch emitter terminal SWE and the ground voltage SGND. The diode D71 (corresponding to the fourth diode) has an anode coupled to the negative equipment voltage -VP2 and a cathode coupled to the internal switch emitter terminal SWE. The capacitor C73 (corresponding to the nineteenth capacitor) is coupled between the negative equipment voltage -VP2 and the ground voltage SGND.

Based on the above, when the external power grid Grid experiences a power outage, the discharge circuit 160a and the output switching circuit 170 provide the pilot voltage +CP_VP and the positive equipment voltage +VP2 based on the power of the battery 140. The discharge circuit 160a converts the battery voltage BAT_VP of the battery 140 into the output voltage VPout. When the supply target signal SupplyTarget is at a first level (e.g., a low voltage level), the output switching circuit 170 provides the output voltage VPout as the pilot voltage +CP_VP to detect whether the charging gun Gev is connected to the electric vehicle CARev. When it is determined that the charging gun Gev is connected to the electric vehicle CARev, the supply target signal SupplyTarget may switch to a second level (e.g., a high voltage level), causing the output switching circuit 170 to provide the output voltage VPout as the positive equipment voltage +VP2. Additionally, the auxiliary discharge circuit 180a converts the positive equipment voltage +VP2 into the negative equipment voltage -VP2.

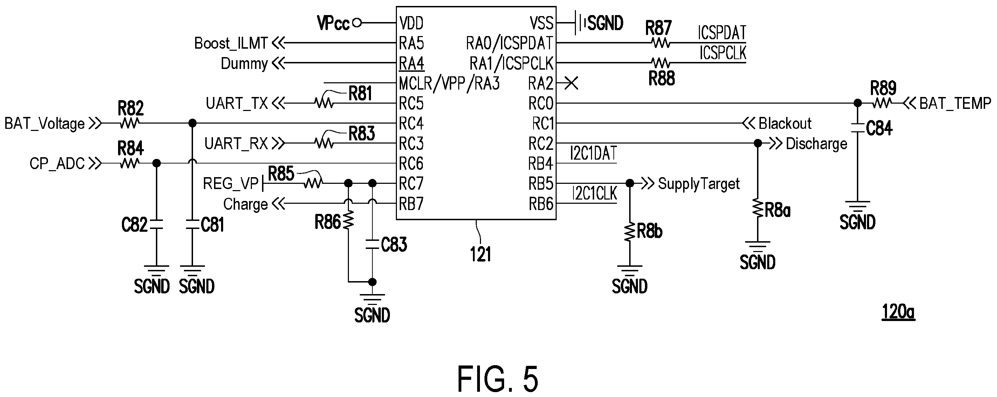

FIG. 5 is a schematic circuit diagram illustrating the control circuit according to an embodiment of the disclosure. Referring to FIGs. 1 and 5, in this embodiment, the control circuit 120 is exemplified as a control circuit 120a, and the control circuit 120a includes a microcontroller 121, resistors R81 to R89, R8a and R8b, and capacitors C81 to C84.

The microcontroller 121 has a component power terminal VDD that receives the circuit power supply voltage VPcc, an input/output terminal RA5 (corresponding to the third input/output terminal) that provides the bootstrap current limiting signal Boost_ILMT, an input/output terminal RA4 (corresponding to the second input/output terminal) that provides the virtual load signal Dummy, and an input/output terminal MCLR/VPP/RA3 (corresponding to the first input/output terminal) that receives the external reset signal MCLR. It also has an input/output terminal RC5 (corresponding to the thirteenth input/output terminal), an input/output terminal RC4 (corresponding to the twelfth input/output terminal), an input/output terminal RC3 (corresponding to the eleventh input/output terminal), an input/output terminal RC6 (corresponding to the fourteenth input/output terminal), and an input/output terminal RC7 (corresponding to the fifteenth input/output terminal). The microcontroller 121 provides the charging control signal Charge through an input/output terminal RB7 (corresponding to the seventh input/output terminal), receives the chip ground voltage SGND through a chip ground terminal VSS, and includes an input/output terminal RA0/ICSPDAT, an input/output terminal RA1/ICSPCLK, and an input/output terminal RA2. It also has an input/output terminal RC0 (corresponding to the eighth input/output terminal), an input/output terminal RC1 (corresponding to the ninth input/output terminal) that receives the power failure indication signal Blackout, and an input/output terminal RC2 (corresponding to the tenth input/output terminal) that provides the discharge control signal Discharge. Additionally, it includes an input/output terminal RB4 (corresponding to the fourth input/output terminal) coupled to a serial data signal I2C1DAT of the inter-integrated circuit signal, an input/output terminal RB5 (corresponding to the fifth input/output terminal) that provides the supply target signal SupplyTarget, and an input/output terminal RB6 (corresponding to the sixth input/output terminal) coupled to a serial clock signal I2C1CLK of the inter-integrated circuit signal.

The resistor R81 (corresponding to the twenty-eighth resistor) is coupled between a transmission signal UART_TX of the universal asynchronous receiver-transmitter signal and the input/output terminal RC5. The resistor R82 (corresponding to the twenty-ninth resistor) is coupled between the battery voltage signal BAT_Voltage and the input/output terminal RC4. The capacitor C81 (corresponding to the twentieth capacitor) is coupled between the input/output terminal RC4 and the ground voltage SGND. The resistor R83 (corresponding to the thirtieth resistor) is coupled between a received signal UART_RX of the universal asynchronous receiver-transmitter signal and the input/output terminal RC3.

The resistor R84 (corresponding to the thirty-first resistor) is coupled between the pilot signal CP_ADC that transmits the pilot information and the input/output terminal RC6. The capacitor C82 (corresponding to the twenty-first capacitor) is coupled between the input/output terminal RC6 and the ground voltage SGND. The resistor R85 (corresponding to the thirty-second resistor) is coupled between an internal voltage regulation power supply voltage REG_VP (e.g., +2.5 volts) and the input/output terminal RC7. The resistor R86 (corresponding to the thirty-third resistor) is coupled between the input/output terminal RC7 and the ground voltage SGND. The capacitor C83 (corresponding to the twenty-second capacitor) is coupled between the input/output terminal RC7 and the ground voltage SGND.

The resistor R87 is coupled between the input/output terminal RA0/ICSPDAT and the in-circuit serial programming data signal ICSPDAT. The resistor R88 is coupled between the input/output terminal RA1/ICSPCLK and the in-circuit serial programming clock signal ICSPCLK. The resistor R89 (corresponding to the thirty-fourth resistor) is coupled between the input/output terminal RC0 and the battery temperature signal BAT_TEMP. The capacitor C84 (corresponding to the twenty-third capacitor) is coupled between the input/output terminal RC0 and the ground voltage SGND. The resistor R8a (corresponding to the thirty-fifth resistor) is coupled between the input/output terminal RC2 and the ground voltage SGND. The resistor R8b (corresponding to the thirty-sixth resistor) is coupled between the input/output terminal RB5 and the ground voltage SGND.

Here, the control circuit 120a receives battery-related information from the monitoring circuit 190, uses the universal asynchronous receiver-transmitter (UART) signal to communicate with the protection circuit 110, provides software updates, establishes activation signal pathways with other circuits in the battery backup system/solution BPS, and provides operational signals to the charging circuit 130, the discharge circuit 160, and other electrical circuits.

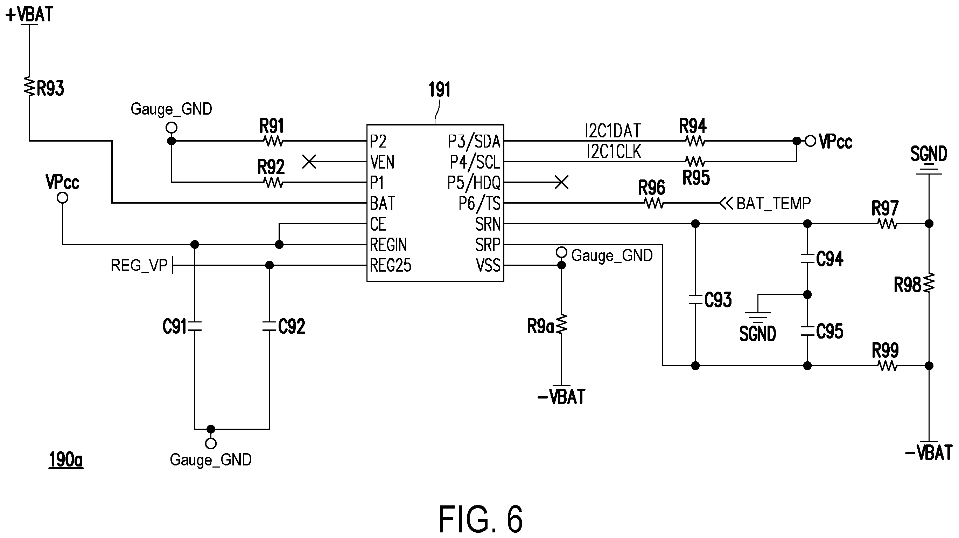

FIG. 6 illustrates a circuit diagram of the monitoring circuit according to an embodiment of the disclosure. Referring to FIGs. 1 and 6, in this embodiment, the monitoring circuit 190, for example, is represented by a monitoring circuit 190a, and the monitoring circuit 190a, for example, includes a measurement chip 191, resistors R91 to R99 and R9a, and capacitors C91 to C94.

The measurement chip 191 includes an external component terminal P1, an unconnected voltage enable terminal VEN, an external component terminal P2, a battery connection terminal BAT, a chip enable terminal CE receiving the circuit power supply voltage VPcc, an internal voltage regulation input terminal REGIN receiving the circuit power supply voltage VPcc, an internal voltage regulation output terminal REG25 providing the internal voltage regulation power supply voltage REG_VP, a serial data terminal P3/SDA coupled to the serial data signal I2C1DAT, a serial clock terminal P4/SCL coupled to the serial clock signal I2C1CLK, an unconnected serial communication terminal P5/HDQ, a temperature sensing terminal P6/TS, a negative analog input terminal SRN, a positive analog input terminal SRP, and a chip ground terminal VSS.

The resistor R91 is coupled between a measurement ground voltage Gauge_GND and the external component terminal P1. The resistor R92 is coupled between the measurement ground voltage Gauge_GND and the external component terminal P2. The resistor R93 (corresponding to the thirty-seventh resistor) is coupled between the positive battery terminal +VBAT and the battery connection terminal BAT. The capacitor C91 (corresponding to the twenty-fourth capacitor) is coupled between the internal voltage regulation input terminal REGIN and the measurement ground voltage Gauge_GND. The capacitor C92 (corresponding to the twenty-fifth capacitor) is coupled between the internal voltage regulation output terminal REG25 and the measurement ground voltage Gauge_GND.

The resistor R94 (corresponding to the thirty-eighth resistor) is coupled between the circuit power supply voltage VPcc and the serial data terminal P3/SDA. The resistor R95 (corresponding to the thirty-ninth resistor) is coupled between the circuit power supply voltage VPcc and the serial clock terminal P4/SCL. The resistor R96 (corresponding to the fortieth resistor) is coupled between the temperature sensing terminal P6/TS and the battery temperature signal BAT_TEMP. The capacitor C93 (corresponding to the twenty-sixth capacitor) is coupled between the negative analog input terminal SRN and the positive analog input terminal SRP. The capacitor C94 (corresponding to the twenty-seventh capacitor) is coupled between the negative analog input terminal SRN and the ground voltage SGND.

The capacitor C95 (corresponding to the twenty-eighth capacitor) is coupled between the positive analog input terminal SRP and the ground voltage SGND. The resistor R97 (corresponding to the forty-first resistor) is coupled between the negative analog input terminal SRN and the ground voltage SGND. The resistor R98 (corresponding to the forty-second resistor) is coupled between the ground voltage SGND and the negative battery terminal -VBAT. The resistor R99 (corresponding to the forty-third resistor) is coupled between the positive analog input terminal SRP and the negative battery terminal -VBAT. The resistor R9a (corresponding to the forty-fourth resistor) is coupled between the chip ground terminal VSS and the negative battery terminal -VBAT. Accordingly, the monitoring circuit 190a communicates with the control circuit 120a using an inter-integrated circuit (I2C) signal and transmits the recorded battery voltage BAT_VP, charge-discharge current, and the calculated battery capacity and health status information to the control circuit 120a.

In the above embodiment, a single resistor may be replaced by multiple resistors connected in series or parallel, depending on the circuit design, and the embodiments of the disclosure are not limited thereto.

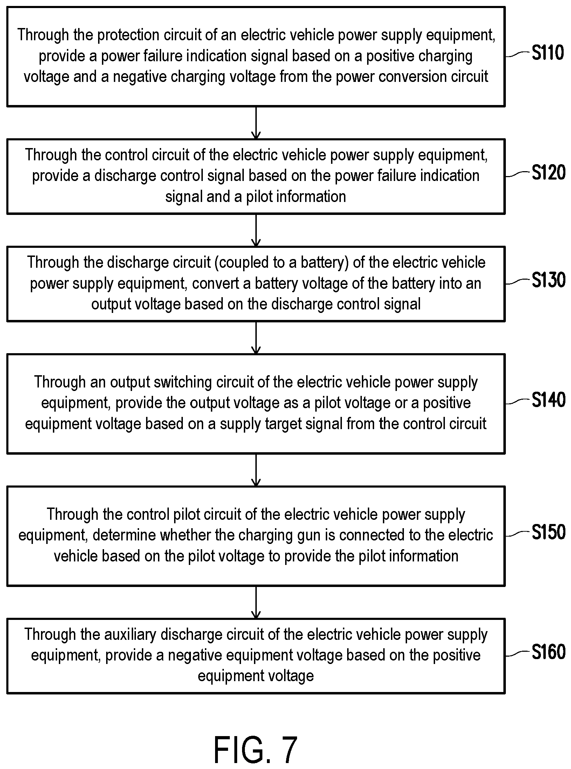

FIG. 7 illustrates a flowchart of the battery backup method for the electric vehicle power supply equipment according to an embodiment of the disclosure. Referring to FIG. 7, in this embodiment, the battery backup method for the electric vehicle power supply equipment includes the following processes. In step S110, a power failure indication signal is provided through the protection circuit of the electric vehicle power supply equipment based on the positive charging voltage and the negative charging voltage. In step S120, a discharge control signal is provided through the control circuit of the electric vehicle power supply equipment based on the power failure indication signal and the pilot information.

In step S130, the battery voltage of the battery is converted into an output voltage through a discharge circuit of the electric vehicle power supply equipment, which is coupled to the battery, based on the discharge control signal. In step S140, the output voltage is provided as a pilot voltage or a positive equipment voltage through an output switching circuit of the electric vehicle power supply equipment based on a supply target signal from the control circuit. In step S150, whether the charging gun is connected to the electric vehicle is determined based on the pilot voltage through a control pilot circuit of the electric vehicle power supply equipment to provide the pilot information. In step S160, a negative equipment voltage is provided based on the positive equipment voltage through an auxiliary discharge circuit of the electric vehicle power supply equipment, wherein the positive charging voltage and the negative charging voltage are received from a power conversion circuit or the connected electric vehicle. The sequence of steps S110, S120, S130, S140, S150, and S160 is provided for illustration and is not limited thereto in the embodiments of the disclosure. Additionally, the details of steps S110, S120, S130, S140, S150, and S160 may be referred to in FIGs. 1 to 6 and will not be redundantly described here.

In summary, in the electric vehicle power supply equipment, the battery backup method, and the power backup device of the embodiments of the disclosure, when the protection circuit indicates that the positive charging voltage and the negative charging voltage are not received through the power failure indication signal, and when the control pilot circuit indicates that the charging gun is connected to the electric vehicle through the pilot information, the battery voltage is converted into the positive equipment voltage and the negative equipment voltage to supply power to the communication circuit of the electric vehicle power supply equipment to maintain the communication function of the electric vehicle power supply equipment.

## Claims

1. An electric vehicle power supply equipment (100), comprising:
a battery (140), having a positive battery terminal (+VBAT) and a negative battery terminal (-VBAT);
a protection circuit (110), receiving a positive charging voltage (+VP1) and a negative charging voltage (-VP1) to provide a power failure indication signal (Blackout) based on the positive charging voltage (+VP1) and the negative charging voltage (-VP1);
a control circuit (120, 120a), coupled to the protection circuit (110) to receive the power failure indication signal (Blackout) and provide a discharge control signal (Discharge) based on the power failure indication signal (Blackout) and a pilot information;
a discharge circuit (160, 160a), coupled to the control circuit (120, 120a), the positive battery terminal (+VBAT), and the negative battery terminal (-VBAT), and receiving the discharge control signal (Discharge) to convert a battery voltage (BAT_VP) of the battery (140) into an output voltage (VPout) based on the discharge control signal (Discharge);
an output switching circuit (170, 170a), coupled to the control circuit (120, 120a) and the discharge circuit (160, 160a) to receive a supply target signal (SupplyTarget) from the control circuit (120, 120a) and receive the output voltage (VPout) from the discharge circuit (160, 160a), wherein the output switching circuit (170, 170a) provides the output voltage (VPout) as a pilot voltage (+CP_VP) or a positive equipment voltage (+VP2) based on the supply target signal (SupplyTarget);
a control pilot circuit (150), coupled to the control circuit (120, 120a) and the output switching circuit (170, 170a) to receive the pilot voltage (+CP_VP) and determine whether a charging gun (Gev) is connected to an electric vehicle (CARev) based on the pilot voltage (+CP_VP), so as to provide the pilot information to the control circuit (120, 120a); and
an auxiliary discharge circuit (180, 180a), coupled to the output switching circuit (170, 170a) to receive the positive equipment voltage (+VP2) and provide a negative equipment voltage (-VP2),
wherein the positive charging voltage (+VP1) and the negative charging voltage (-VP1) are received from a power supply conversion circuit (10) or the connected electric vehicle (CARev).

2. The electric vehicle power supply equipment (100) according to claim 1, wherein the output switching circuit (170, 170a) provides the output voltage (VPout) as the pilot voltage (+CP_VP) by default based on the supply target signal (SupplyTarget), and
when the pilot voltage (+CP_VP) drops from a power level to a predetermined level, the control pilot circuit (150) determines that the charging gun (Gev) is connected to the electric vehicle (CARev), and when the pilot voltage (+CP_VP) remains at the power level, the control pilot circuit (150) determines that the charging gun (Gev) is not connected to the electric vehicle (CARev).

3. The electric vehicle power supply equipment (100) according to claim 1, wherein the control circuit (120, 120a) provides a charging control signal (Charge) based on the power failure indication signal (Blackout), and
wherein the electric vehicle power supply equipment (100) further comprises: a charging circuit (130, 130a), coupled to the positive battery terminal (+VBAT) and the negative battery terminal (-VBAT) and coupled to the control circuit (120, 120a) to receive the charging control signal (Charge), the charging circuit (130, 130a) receiving the positive charging voltage (+VP1), wherein the charging circuit (130, 130a) charges the battery (140) using the positive charging voltage (+VP1) based on the charging control signal (Charge).

4. The electric vehicle power supply equipment (100) according to claim 3, wherein when the power failure indication signal (Blackout) indicates that the protection circuit (110) does not receive the positive charging voltage (+VP1) and the negative charging voltage (-VP1), and the pilot information indicates that the charging gun (Gev) is connected to the electric vehicle (CARev), the control circuit (120, 120a) provides the discharge control signal (Discharge), and
when the power failure indication signal (Blackout) indicates that the protection circuit (110) receives the positive charging voltage (+VP1) and the negative charging voltage (-VP1), the control circuit (120, 120a) provides the charging control signal (Charge).

5. The electric vehicle power supply equipment (100) according to claim 3, wherein the charging circuit (130, 130a) comprises:
a buck conversion circuit (210), receiving the positive charging voltage (+VP1), the charging control signal (Charge), and a feedback voltage (Vfb) to provide a buck power supply voltage (VPbuck);
a filter circuit (220), coupled to the buck conversion circuit (210) to receive the buck power supply voltage (VPbuck) and provide a charging power supply voltage (VPcharge);
a feedback circuit (250), coupled to the negative battery terminal (-VBAT) and the buck conversion circuit (210) to provide the feedback voltage (Vfb);
an overvoltage protection circuit (230), coupled between the filter circuit (220) and the positive battery terminal (+VBAT) to connect and disconnect the charging power supply voltage (VPcharge) and the positive battery terminal (+VBAT) based on the charging power supply voltage (VPcharge); and
a virtual load circuit (240), coupled to the positive battery terminal (+VBAT) and receiving a virtual load signal (Dummy) from the control circuit (120, 120a) to discharge the battery (140) in response to the virtual load signal (Dummy).

6. The electric vehicle power supply equipment (100) according to claim 5, wherein the buck conversion circuit (210) comprises:
a buck circuit chip (211), having a first power voltage input terminal (VIN) receiving the positive charging voltage (+VP1), a first enable input terminal (EN) receiving the charging control signal (Charge), a first bootstrap terminal (VBST), a first switch node terminal (SW) providing the buck power supply voltage (VPbuck), and a buck feedback terminal (VFB) receiving the feedback voltage (Vfb);
a first resistor (R01), coupled between a system power supply voltage (VPPS) and the first power voltage input terminal (VIN);
a first capacitor (C01), coupled between the first power voltage input terminal (VIN) and a ground voltage (SGND);
a second resistor (R02), coupled between the first enable input terminal (EN) and the ground voltage (SGND); and
a second capacitor (C02), coupled between the first bootstrap terminal (VBST) and the first switch node terminal (SW).

7. The electric vehicle power supply equipment (100) according to claim 5, wherein the filter circuit (220) comprises:
a first inductor (L11) and a second inductor (L12), serially connected between the buck power supply voltage (VPbuck) and the charging power supply voltage (VPcharge); and
a third capacitor (C11), coupled between a connection point between the first inductor (L11) and the second inductor (L12) and a ground voltage (SGND).

8. The electric vehicle power supply equipment (100) according to claim 5, wherein the feedback circuit (250) comprises:
a differential amplifier chip (251), having an output terminal (VOUT), a positive input terminal (+IN), and a negative input terminal (-IN);
a third resistor (R21), coupled between the feedback voltage (Vfb) and the output terminal (VOUT);
a fourth capacitor (C21), coupled between the output terminal (VOUT) and a ground voltage (SGND);
a fourth resistor (R22), coupled between the output terminal (VOUT) and the negative input terminal (-IN);
a fifth capacitor (C22), coupled between the output terminal (VOUT) and the negative input terminal (-IN);
a fifth resistor (R23), coupled between the positive input terminal (+IN) and the ground voltage (SGND);
a sixth resistor (R24), coupled between the positive input terminal (+IN) and the negative battery terminal (-VBAT);
a seventh resistor (R25), coupled between the negative battery terminal (-VBAT) and the ground voltage (SGND); and
an eighth resistor (R26), coupled between the negative input terminal (-IN) and the ground voltage (SGND).

9. The electric vehicle power supply equipment (100) according to claim 5, wherein the overvoltage protection circuit (230) comprises:
a zener shunt regulator (DCReg), having an anode coupled to a ground voltage (SGND), a cathode, and a reference terminal;
a ninth resistor (R31), coupled between the charging power supply voltage (VPcharge) and the reference terminal of the zener shunt regulator (DCReg);
a tenth resistor (R32), coupled between the reference terminal of the zener shunt regulator (DCReg) and the ground voltage (SGND);
an eleventh resistor (R33), coupled between the charging power supply voltage (VPcharge) and the cathode of the zener shunt regulator (DCReg);
a first transistor (M31), having a first terminal receiving the charging power supply voltage (VPcharge), a control terminal coupled to the cathode of the zener shunt regulator (DCReg), and a second terminal;
a second transistor (M32), having a first terminal receiving the charging power supply voltage (VPcharge), a control terminal coupled to the second terminal of the first transistor (M31), and a second terminal;
a twelfth resistor (R34), coupled between the second terminal of the first transistor (M31) and the ground voltage (SGND); and
a first diode (D31), having an anode coupled to the second terminal of the first transistor (M31) and a cathode coupled to the positive battery terminal (+VBAT).

10. The electric vehicle power supply equipment (100) according to claim 5, wherein the virtual load circuit (240) comprises:
a second diode (D41), having an anode coupled to the positive battery terminal (+VBAT) and a cathode receiving a circuit power supply voltage (VPcc);
a third transistor (M41), having a first terminal, a control terminal receiving the virtual load signal (Dummy), and a second terminal receiving a ground voltage (SGND);
a thirteenth resistor (R41), coupled between the positive battery terminal (+VBAT) and the first terminal of the third transistor (M41);
a fourteenth resistor (R42), coupled between the ground voltage (SGND) and the control terminal of the third transistor (M41); and
a sixth capacitor (C41), coupled between the circuit power supply voltage (VPcc) and the ground voltage (SGND).

11. The electric vehicle power supply equipment (100) according to claim 1, wherein the discharge circuit (160, 160a) comprises:
a boost circuit chip (161), having a second power voltage input terminal (VIN) coupled to the positive battery terminal (+VBAT), a second enable input terminal (EN) receiving the discharge control signal (Discharge), a second bootstrap terminal (BST), a second switch node terminal (SW), a voltage output terminal (VO) providing the output voltage (VPout), a first voltage comparison terminal (COMP), a current limit terminal (ILIM) receiving a bootstrap current limiting signal (Boost_ILMT), and a boost feedback terminal (FB);
a seventh capacitor (C51), coupled between the positive battery terminal (+VBAT) and a ground voltage (SGND);
an eighth capacitor (C52), coupled between the positive battery terminal (+VBAT) and the ground voltage (SGND);
a ninth capacitor (C55), coupled between the second bootstrap terminal (BST) and the second switch node terminal (SW);
a third inductor (L51), coupled between the positive battery terminal (+VBAT) and the second switch node terminal (SW);
a fifteenth resistor (R54) and a sixteenth resistor (R55), serially connected between the output voltage (VPout) and the ground voltage (SGND);
a seventeenth resistor (R56), coupled between the boost feedback terminal (FB) and a connection point between the fifteenth resistor (R54) and the sixteenth resistor (R55); and
a tenth capacitor (C54) and an eighteenth resistor (R57), serially connected between the first voltage comparison terminal (COMP) and the ground voltage (SGND).

12. The electric vehicle power supply equipment (100) according to claim 1, wherein the output switching circuit (170, 170a) comprises:
an eleventh capacitor (C61), coupled between the output voltage (VPout) and a ground voltage (SGND);
a twelfth capacitor (C62), coupled between the output voltage (VPout) and the ground voltage (SGND);
a fourth transistor (M61), having a first terminal receiving the output voltage (VPout), a control terminal, and a second terminal;
a nineteenth resistor (R61), coupled between the first terminal of the fourth transistor (M61) and the control terminal of the fourth transistor (M61);
a thirteenth capacitor (C63), coupled between the second terminal of the fourth transistor (M61) and the control terminal of the fourth transistor (M61);
a third diode (D61), having an anode (A_D61) coupled to the second terminal of the fourth transistor (M61) and a cathode providing the positive equipment voltage (+VP2);
a fifth transistor (M62), having a first terminal, a control terminal, and a second terminal coupled to the ground voltage (SGND);
a twentieth resistor (R62), coupled between the control terminal of the fourth transistor (M61) and the first terminal of the fifth transistor (M62);
a twenty-first resistor (R63), coupled between the supply target signal (SupplyTarget) and the control terminal of the fifth transistor (M62);
a fourteenth capacitor (C64), coupled between the control terminal of the fifth transistor (M62) and the second terminal of the fifth transistor (M62);
a sixth transistor (M63), having a first terminal, a control terminal, and a second terminal coupled to the ground voltage (SGND);
a twenty-second resistor (R64), coupled between the supply target signal (SupplyTarget) and the control terminal of the sixth transistor (M63);
a twenty-third resistor (R65), coupled between the output voltage (VPout) and the first terminal of the sixth transistor (M63);
a fifteenth capacitor (C65), coupled between the control terminal of the sixth transistor (M63) and the second terminal of the sixth transistor (M63);
a seventh transistor (M64), having a first terminal receiving the output voltage (VPout), a control terminal, and a second terminal providing the pilot voltage (+CP_VP);
a twenty-fourth resistor (R66), coupled between the first terminal of the seventh transistor (M64) and the control terminal of the seventh transistor (M64);
a sixteenth capacitor (C66), coupled between the second terminal of the seventh transistor (M64) and the ground voltage (SGND); and
an eighth transistor (M65), having a first terminal coupled to the control terminal of the seventh transistor (M64), a control terminal coupled to the first terminal of the sixth transistor (M63), and a second terminal coupled to the ground voltage (SGND).

13. The electric vehicle power supply equipment (100) according to claim 12, wherein the auxiliary discharge circuit (180, 180a) comprises:
a buck-boost circuit chip (181), having a current limiting sensing input terminal (IPK), an internal voltage regulation output terminal (VCCO) coupled to the anode (A_D61) of the third diode (D61), a second voltage comparison terminal (COMP), an internal switch collector terminal (SWC) coupled to the current limiting sensing input terminal (IPK), an internal switch emitter terminal (SWE), and a timing capacitor terminal (TCAP);
a seventeenth capacitor (C71), coupled between the anode (A_D61) of the third diode (D61) and the ground voltage (SGND);
a twenty-fifth resistor (R71), coupled between the anode (A_D61) of the third diode (D61) and the current limiting sensing input terminal (IPK);
a twenty-sixth resistor (R72), coupled between the second voltage comparison terminal (COMP) and the ground voltage (SGND);
a twenty-seventh resistor (R73), coupled between the second voltage comparison terminal (COMP) and the negative equipment voltage (-VP2);
an eighteenth capacitor (C72), coupled between the timing capacitor terminal (TCAP) and the negative equipment voltage (-VP2);
a fourth inductor (L71), coupled between the internal switch emitter terminal (SWE) and the ground voltage (SGND);
a fourth diode (D71), having an anode coupled to the negative equipment voltage (-VP2) and a cathode coupled to the internal switch emitter terminal (SWE); and
a nineteenth capacitor (C73), coupled between the negative equipment voltage (-VP2) and the ground voltage (SGND).

14. The electric vehicle power supply equipment (100) according to claim 1, further comprising a monitoring circuit (190, 190a), coupled to the battery (140) and the control circuit (120, 120a), and configured to monitor a battery voltage (BAT_VP), a charge-discharge current, a battery temperature, a battery capacity, and a battery health status information of the battery (140), wherein when the battery health status information indicates a low health status of the battery (140), the battery health status information is transmitted to the protection circuit (110) through the control circuit (120, 120a) to send a battery warning signal (BAT_Alt) through the protection circuit (110),
wherein the battery capacity and the battery health status information are calculated based on the battery voltage (BAT_VP), the charge-discharge current, and the battery temperature.

15. The electric vehicle power supply equipment (100) according to claim 14, wherein the monitoring circuit (190, 190a) transmits the battery health status information to the control circuit (120, 120a) through a first serial communication signal (SXE1), and the control circuit (120, 120a) transmits the battery health status information to the protection circuit (110) through a second serial communication signal (SXE2).

16. The electric vehicle power supply equipment (100) according to claim 15, wherein the first serial communication signal (SXE1) comprises an inter-integrated circuit signal, and the second serial communication signal (SXE2) comprises a universal asynchronous receiver-transmitter signal.

17. The electric vehicle power supply equipment (100) according to claim 16, wherein the control circuit (120, 120a) comprises:
a microcontroller (121), having a first input/output terminal (MCLR/VPP/RA3) receiving an external reset signal (MCLR), a second input/output terminal (RA4) providing a virtual load signal (Dummy), a third input/output terminal (MCLR/VPP/RA3) providing a bootstrap current limiting signal (Boost_ILMT), a fourth input/output terminal (RB4) coupled to a serial data signal (I2C1DAT) of the inter-integrated circuit signal, a fifth input/output terminal (RB5) providing the supply target signal (SupplyTarget), a sixth input/output terminal (RB6) coupled to a serial clock signal (I2C1CLK) of the inter-integrated circuit signal, a seventh input/output terminal (RB7) providing the charging control signal (Charge), an eighth input/output terminal (RC0), a ninth input/output terminal (RC1) receiving the power failure indication signal (Blackout), a tenth input/output terminal (RC2) providing the discharge control signal (Discharge), an eleventh input/output terminal (RC3), a twelfth input/output terminal (RC4), a thirteenth input/output terminal (RC5), a fourteenth input/output terminal (RC6), and a fifteenth input/output terminal (RC7);
a twenty-eighth resistor (R81), coupled between a transmission signal (UART_TX) of the universal asynchronous receiver-transmitter signal and the thirteenth input/output terminal (RC5);
a twenty-ninth resistor (R82), coupled between a battery voltage signal (BAT_Voltage) and the twelfth input/output terminal (RC4);
a twentieth capacitor (C81), coupled between the twelfth input/output terminal (RC4) and a ground voltage (SGND);
a thirtieth resistor (R83), coupled between a received signal (UART_RX) of the universal asynchronous receiver-transmitter signal and the eleventh input/output terminal (RC3);
a thirty-first resistor (R84), coupled between a pilot signal (CP_ADC) transmitting the pilot information and the fourteenth input/output terminal (RC6);
a twenty-first capacitor (C82), coupled between the fourteenth input/output terminal (RC6) and the ground voltage (SGND);
a thirty-second resistor (R85), coupled between an internal voltage regulation power supply voltage (REG_VP) and the fifteenth input/output terminal (RC7);
a thirty-third resistor (R86), coupled between the fifteenth input/output terminal (RC7) and the ground voltage (SGND);
a twenty-second capacitor (C83), coupled between the fifteenth input/output terminal (RC7) and the ground voltage (SGND);
a thirty-fourth resistor (R89), coupled between the eighth input/output terminal (RC0) and a battery temperature signal (BAT_TEMP);
a twenty-third capacitor (C84), coupled between the eighth input/output terminal (RC0) and the ground voltage (SGND);
a thirty-fifth resistor (R8a), coupled between the tenth input/output terminal (RC2) and the ground voltage (SGND); and
a thirty-sixth resistor (R8b), coupled between the fifth input/output terminal (RB5) and the ground voltage (SGND).

18. The electric vehicle power supply equipment (100) according to claim 17, wherein the monitoring circuit (190, 190a) comprises:
a measurement chip (191), having a battery connection terminal (BAT), a chip enable terminal (CE) receiving a circuit power supply voltage (VPcc), an internal voltage regulation input terminal (REGIN) receiving the circuit power supply voltage (VPcc), an internal voltage regulation output terminal (REG25) providing the internal voltage regulation power supply voltage (REG_VP), a serial data terminal (P3/SDA) coupled to the serial data signal (I2C1DAT), a serial clock terminal (P4/SCL) coupled to the serial clock signal (I2C1CLK), a temperature sensing terminal (P6/TS), a negative analog input terminal (SRN), a positive analog input terminal (SRP), and a chip ground terminal (VSS);
a thirty-seventh resistor (R93), coupled between the positive battery terminal (+VBAT) and the battery connection terminal (BAT);
a twenty-fourth capacitor (C91), coupled between the internal voltage regulation input terminal (REGIN) and a measurement ground voltage (Gauge_GND);
a twenty-fifth capacitor (C92), coupled between the internal voltage regulation output terminal (REG25) and the measurement ground voltage (Gauge_GND);
a thirty-eighth resistor (R94), coupled between the circuit power supply voltage (VPcc) and the serial data terminal (P3/SDA);
a thirty-ninth resistor (R95), coupled between the circuit power supply voltage (VPcc) and the serial clock terminal (P4/SCL);
a fortieth resistor (R96), coupled between the temperature sensing terminal (P6/TS) and the battery temperature signal (BAT_TEMP);
a twenty-sixth capacitor (C93), coupled between the negative analog input terminal (SRN) and the positive analog input terminal (SRP);
a twenty-seventh capacitor (C94), coupled between the negative analog input terminal (SRN) and a ground voltage (SGND);
a twenty-eighth capacitor (C95), coupled between the positive analog input terminal (SRP) and the ground voltage (SGND);
a forty-first resistor (R97), coupled between the negative analog input terminal (SRN) and the ground voltage (SGND);
a forty-second resistor (R98), coupled between the ground voltage (SGND) and the negative battery terminal (-VBAT);
a forty-third resistor (R99), coupled between the positive analog input terminal (SRP) and the negative battery terminal (-VBAT); and
a forty-fourth resistor (R9a), coupled between the chip ground terminal (VSS) and the negative battery terminal (-VBAT).

19. A battery backup method for an electric vehicle power supply equipment (100), comprising:
providing a power failure indication signal (Blackout) through a protection circuit (110) of the electric vehicle power supply equipment (100) based on a positive charging voltage (+VP1) and a negative charging voltage (-VP1);
providing a discharge control signal (Discharge) through a control circuit (120, 120a) of the electric vehicle power supply equipment (100) based on the power failure indication signal (Blackout) and a pilot information;
converting a battery voltage (BAT_VP) of a battery (140) into an output voltage (VPout) through a discharge circuit (160, 160a) of the electric vehicle power supply equipment (100) based on the discharge control signal (Discharge), the discharge circuit (160, 160a) being coupled to the battery (140);
providing the output voltage (VPout) as a pilot voltage (+CP_VP) or a positive equipment voltage (+VP2) through an output switching circuit (170, 170a) of the electric vehicle power supply equipment (100) based on a supply target signal (SupplyTarget) from the control circuit (120, 120a);
determining whether a charging gun (Gev) is connected to an electric vehicle (CARev) based on the pilot voltage (+CP_VP) through a control pilot circuit (150) of the electric vehicle power supply equipment (100) to provide the pilot information; and
providing a negative equipment voltage (-VP2) based on the positive equipment voltage (+VP2) through an auxiliary discharge circuit (180, 180a) of the electric vehicle power supply equipment (100),
wherein the positive charging voltage (+VP1) and the negative charging voltage (-VP1) are received from a power supply conversion circuit (10) or the connected electric vehicle (CARev).

20. The battery backup method according to claim 19, wherein the output switching circuit (170, 170a) provides the output voltage (VPout) as the pilot voltage (+CP_VP) by default based on the supply target signal (SupplyTarget).

21. The battery backup method according to claim 20, wherein when the pilot voltage (+CP_VP) drops from a power level to a predetermined level, through the control pilot circuit (150), the charging gun (Gev) is determined to be connected to the electric vehicle (CARev), and when the pilot voltage (+CP_VP) remains at the power level, through the control pilot circuit (150), the charging gun (Gev) is determined to be not connected to the electric vehicle (CARev).

22. The battery backup method according to claim 19, further comprising:
providing a charging control signal (Charge) through the control circuit (120, 120a) based on the power failure indication signal (Blackout); and
receiving the charging control signal (Charge) and the positive charging voltage (+VP1) through a charging circuit (130, 130a) of the electric vehicle power supply equipment (100) to charge the battery (140) using the positive charging voltage (+VP1) based on the charging control signal (Charge).

23. The battery backup method according to claim 22, wherein providing the discharge control signal (Discharge) based on the power failure indication signal (Blackout) comprises: when the power failure indication signal (Blackout) indicates that the protection circuit (110) does not receive the positive charging voltage (+VP1) and the negative charging voltage (-VP1), providing the discharge control signal (Discharge) through the control circuit (120, 120a), and
wherein providing the charging control signal (Charge) based on the power failure indication signal (Blackout) comprises: when the power failure indication signal (Blackout) indicates that the protection circuit (110) receives the positive charging voltage (+VP1) and the negative charging voltage (-VP1), providing the charging control signal (Charge) through the control circuit (120, 120a).

24. The battery backup method according to claim 19, further comprising:
monitoring a battery voltage (BAT_VP), a charge-discharge current, a battery temperature, a battery capacity, and a battery health status information of the battery (140) through a monitoring circuit (190, 190a) of the electric vehicle power supply equipment (100); and
when the battery health status information indicates a low health status of the battery (140), the battery health status information is transmitted to the protection circuit (110) through the control circuit (120, 120a) to send a battery warning signal (BAT_Alt) through the protection circuit (110) to at least one of a user device and the electric vehicle (CARev),
wherein the battery capacity and the battery health status information are calculated based on the battery voltage (BAT_VP), the charge-discharge current, and the battery temperature.

25. The battery backup method according to claim 24, wherein the monitoring circuit (190, 190a) transmits the battery health status information to the control circuit (120, 120a) through a first serial communication signal (SXE1), and the control circuit (120, 120a) transmits the battery health status information to the protection circuit (110) through a second serial communication signal (SXE2).

26. The battery backup method according to claim 25, wherein the first serial communication signal (SXE1) comprises an inter-integrated circuit signal, and the second serial communication signal (SXE2) comprises a universal asynchronous receiver-transmitter signal.

27. A power backup device, comprising:
a battery module (140);
a power supply conversion circuit (10), electrically connected to the battery module (140);
an output circuit, electrically connected to the power supply conversion circuit (10); and
a control circuit (120, 120a), electrically connected to the battery module (140), the power supply conversion circuit (10), and the output circuit,
wherein the control circuit (120, 120a) receives an external status indication signal to control the battery module (140) to discharge or control the power supply conversion circuit (10) to charge the battery module (140).

28. The power backup device according to claim 27, wherein the power supply conversion circuit (10) has a first power converter and a second power converter, the first power converter and the second power converter being electrically connected to the battery module (140) and the control circuit (120, 120a) respectively, wherein when the status indication signal represents a first state, the first power converter receives a first power supply and charges the battery module (140), and when the status indication signal represents a second state, the battery module (140) discharges to the second power converter.

29. The power backup device according to claim 27, wherein the output circuit has a selection circuit, a first output path, and a second output path, the selection circuit being electrically connected to the power supply conversion circuit (10), wherein when the status indication signal represents a second state, the selection circuit is electrically connected to the first output path and determines whether the output circuit is electrically connected to a load.

30. The power backup device according to claim 29, wherein when the output circuit is electrically connected to the load, the selection circuit is electrically connected to the second output path and provides a power to the load.

## Amended claims

### Amended claims in accordance with Rule 137(2) EPC.

1. An electric vehicle power supply equipment (100), comprising:
a battery (140), having a positive battery terminal (+VBAT) and a negative battery terminal (-VBAT);
a protection circuit (110), configured to receive a positive charging voltage (+VP1) and a negative charging voltage (-VP1) to provide a power failure indication signal (Blackout) based on the positive charging voltage (+VP1) and the negative charging voltage (-VP1);
a control circuit (120, 120a), coupled to the protection circuit (110) and configured to receive the power failure indication signal (Blackout) and provide a discharge control signal (Discharge) based on the power failure indication signal (Blackout) and a pilot information;
a discharge circuit (160, 160a), coupled to the control circuit (120, 120a), the positive battery terminal (+VBAT), and the negative battery terminal (-VBAT), and configured to receive the discharge control signal (Discharge) and to convert a battery voltage (BAT_VP) of the battery (140) into an output voltage (VPout) based on the discharge control signal (Discharge);
an output switching circuit (170, 170a), coupled to the control circuit (120, 120a) and the discharge circuit (160, 160a), and configured to receive a supply target signal (SupplyTarget) from the control circuit (120, 120a) and receive the output voltage (VPout) from the discharge circuit (160, 160a), wherein the output switching circuit (170, 170a) is configured to provide the output voltage (VPout) to an output path as a pilot voltage (+CP_VP) or to a communication circuit as a positive equipment voltage (+VP2) based on the supply target signal (SupplyTarget);
a control pilot circuit (150), coupled to the control circuit (120, 120a) and the output switching circuit (170, 170a), and configured to receive the pilot voltage (+CP_VP) and determine whether a charging gun (Gev) is connected to an electric vehicle (CARev) based on the pilot voltage (+CP_VP), so as to provide the pilot information to the control circuit (120, 120a); and
an auxiliary discharge circuit (180, 180a), coupled to the output switching circuit (170, 170a) and configured to receive the positive equipment voltage (+VP2) and provide a negative equipment voltage (-VP2),
wherein the positive charging voltage (+VP1) and the negative charging voltage (-VP1) are received from a power supply conversion circuit (10) or the connected electric vehicle (CARev).

2. The electric vehicle power supply equipment (100) according to claim 1, wherein the output switching circuit (170, 170a) is configured to provide the output voltage (VPout) as the pilot voltage (+CP_VP) by default based on the supply target signal (SupplyTarget), and
when the pilot voltage (+CP_VP) drops from a power level to a predetermined level, the control pilot circuit (150) is configured to determine that the charging gun (Gev) is connected to the electric vehicle (CARev), and when the pilot voltage (+CP_VP) remains at the power level, the control pilot circuit (150) is configured to determine that the charging gun (Gev) is not connected to the electric vehicle (CARev).

3. The electric vehicle power supply equipment (100) according to claim 1, wherein the control circuit (120, 120a) is configured to provide a charging control signal (Charge) based on the power failure indication signal (Blackout), and
wherein the electric vehicle power supply equipment (100) further comprises: a charging circuit (130, 130a), coupled to the positive battery terminal (+VBAT) and the negative battery terminal (-VBAT), coupled to the control circuit (120, 120a), and configured to receive the charging control signal (Charge), the charging circuit (130, 130a) is configured to receive the positive charging voltage (+VP1), wherein the charging circuit (130, 130a) is configured to charge the battery (140) using the positive charging voltage (+VP1) based on the charging control signal (Charge).

4. The electric vehicle power supply equipment (100) according to claim 3, wherein when the power failure indication signal (Blackout) indicates that the protection circuit (110) does not receive the positive charging voltage (+VP1) and the negative charging voltage (-VP1), and the pilot information indicates that the charging gun (Gev) is connected to the electric vehicle (CARev), the control circuit (120, 120a) is configured to provide the discharge control signal (Discharge), and
when the power failure indication signal (Blackout) indicates that the protection circuit (110) receives the positive charging voltage (+VP1) and the negative charging voltage (-VP1), the control circuit (120, 120a) is configured to provide the charging control signal (Charge).

5. The electric vehicle power supply equipment (100) according to claim 3, wherein the charging circuit (130, 130a) comprises:
a buck conversion circuit (210), configured to receive the positive charging voltage (+VP1), the charging control signal (Charge), and a feedback voltage (Vfb) and configured to provide a buck power supply voltage (VPbuck);
a filter circuit (220), coupled to the buck conversion circuit (210), and configured to receive the buck power supply voltage (VPbuck) and provide a charging power supply voltage (VPcharge);
a feedback circuit (250), coupled to the negative battery terminal (-VBAT) and the buck conversion circuit (210) and configured to provide the feedback voltage (Vfb);
an overvoltage protection circuit (230), coupled between the filter circuit (220) and the positive battery terminal (+VBAT), and configured to connect and disconnect the charging power supply voltage (VPcharge) and the positive battery terminal (+VBAT) based on the charging power supply voltage (VPcharge); and
a virtual load circuit (240), coupled to the positive battery terminal (+VBAT), configured to receive a virtual load signal (Dummy) from the control circuit (120, 120a), and configured to discharge the battery (140) in response to the virtual load signal (Dummy).

6. The electric vehicle power supply equipment (100) according to claim 5, wherein the buck conversion circuit (210) comprises:
a buck circuit chip (211), having a first power voltage input terminal (VIN) configured to receive the positive charging voltage (+VP1), a first enable input terminal (EN) configured to receive the charging control signal (Charge), a first bootstrap terminal (VBST), a first switch node terminal (SW) providing the buck power supply voltage (VPbuck), and a buck feedback terminal (VFB) configured to receive the feedback voltage (Vfb);
a first resistor (R01), coupled between a system power supply voltage (VPPS) and the first power voltage input terminal (VIN);
a first capacitor (C01), coupled between the first power voltage input terminal (VIN) and a ground voltage (SGND);
a second resistor (R02), coupled between the first enable input terminal (EN) and the ground voltage (SGND); and
a second capacitor (C02), coupled between the first bootstrap terminal (VBST) and the first switch node terminal (SW).

7. The electric vehicle power supply equipment (100) according to claim 5, wherein the filter circuit (220) comprises:
a first inductor (L11) and a second inductor (L12), serially connected between the buck power supply voltage (VPbuck) and the charging power supply voltage (VPcharge); and
a third capacitor (C11), coupled between a connection point between the first inductor (L11) and the second inductor (L12) and a ground voltage (SGND).

8. The electric vehicle power supply equipment (100) according to claim 5, wherein the feedback circuit (250) comprises:
a differential amplifier chip (251), having an output terminal (VOUT), a positive input terminal (+IN), and a negative input terminal (-IN);
a third resistor (R21), coupled between the feedback voltage (Vfb) and the output terminal (VOUT);
a fourth capacitor (C21), coupled between the output terminal (VOUT) and a ground voltage (SGND);
a fourth resistor (R22), coupled between the output terminal (VOUT) and the negative input terminal (-IN);
a fifth capacitor (C22), coupled between the output terminal (VOUT) and the negative input terminal (-IN);
a fifth resistor (R23), coupled between the positive input terminal (+IN) and the ground voltage (SGND);
a sixth resistor (R24), coupled between the positive input terminal (+IN) and the negative battery terminal (-VBAT);
a seventh resistor (R25), coupled between the negative battery terminal (-VBAT) and the ground voltage (SGND); and
an eighth resistor (R26), coupled between the negative input terminal (-IN) and the ground voltage (SGND).

9. The electric vehicle power supply equipment (100) according to claim 5, wherein the overvoltage protection circuit (230) comprises:
a zener shunt regulator (DCReg), having an anode coupled to a ground voltage (SGND), a cathode, and a reference terminal;
a ninth resistor (R31), coupled between the charging power supply voltage (VPcharge) and the reference terminal of the zener shunt regulator (DCReg);
a tenth resistor (R32), coupled between the reference terminal of the zener shunt regulator (DCReg) and the ground voltage (SGND);
an eleventh resistor (R33), coupled between the charging power supply voltage (VPcharge) and the cathode of the zener shunt regulator (DCReg);
a first transistor (M31), having a first terminal receiving the charging power supply voltage (VPcharge), a control terminal coupled to the cathode of the zener shunt regulator (DCReg), and a second terminal;
a second transistor (M32), having a first terminal receiving the charging power supply voltage (VPcharge), a control terminal coupled to the second terminal of the first transistor (M31), and a second terminal;
a twelfth resistor (R34), coupled between the second terminal of the first transistor (M31) and the ground voltage (SGND); and
a first diode (D31), having an anode coupled to the second terminal of the first transistor (M31) and a cathode coupled to the positive battery terminal (+VBAT).

10. The electric vehicle power supply equipment (100) according to claim 5, wherein the virtual load circuit (240) comprises:
a second diode (D41), having an anode coupled to the positive battery terminal (+VBAT) and a cathode receiving a circuit power supply voltage (VPcc);
a third transistor (M41), having a first terminal, a control terminal receiving the virtual load signal (Dummy), and a second terminal receiving a ground voltage (SGND);
a thirteenth resistor (R41), coupled between the positive battery terminal (+VBAT) and the first terminal of the third transistor (M41);
a fourteenth resistor (R42), coupled between the ground voltage (SGND) and the control terminal of the third transistor (M41); and
a sixth capacitor (C41), coupled between the circuit power supply voltage (VPcc) and the ground voltage (SGND).

11. The electric vehicle power supply equipment (100) according to claim 1, wherein the discharge circuit (160, 160a) comprises:
a boost circuit chip (161), having a second power voltage input terminal (VIN) coupled to the positive battery terminal (+VBAT), a second enable input terminal (EN) configured to receive the discharge control signal (Discharge), a second bootstrap terminal (BST), a second switch node terminal (SW), a voltage output terminal (VO) providing the output voltage (VPout), a first voltage comparison terminal (COMP), a current limit terminal (ILIM) configured to receive a bootstrap current limiting signal (Boost_ILMT), and a boost feedback terminal (FB);
a seventh capacitor (C51), coupled between the positive battery terminal (+VBAT) and a ground voltage (SGND);
an eighth capacitor (C52), coupled between the positive battery terminal (+VBAT) and the ground voltage (SGND);
a ninth capacitor (C55), coupled between the second bootstrap terminal (BST) and the second switch node terminal (SW);
a third inductor (L51), coupled between the positive battery terminal (+VBAT) and the second switch node terminal (SW);
a fifteenth resistor (R54) and a sixteenth resistor (R55), serially connected between the output voltage (VPout) and the ground voltage (SGND);
a seventeenth resistor (R56), coupled between the boost feedback terminal (FB) and a connection point between the fifteenth resistor (R54) and the sixteenth resistor (R55); and
a tenth capacitor (C54) and an eighteenth resistor (R57), serially connected between the first voltage comparison terminal (COMP) and the ground voltage (SGND).

12. The electric vehicle power supply equipment (100) according to claim 1, wherein the output switching circuit (170, 170a) comprises:
an eleventh capacitor (C61), coupled between the output voltage (VPout) and a ground voltage (SGND);
a twelfth capacitor (C62), coupled between the output voltage (VPout) and the ground voltage (SGND);
a fourth transistor (M61), having a first terminal configured to receiv the output voltage (VPout), a control terminal, and a second terminal;
a nineteenth resistor (R61), coupled between the first terminal of the fourth transistor (M61) and the control terminal of the fourth transistor (M61);
a thirteenth capacitor (C63), coupled between the second terminal of the fourth transistor (M61) and the control terminal of the fourth transistor (M61);
a third diode (D61), having an anode (A_D61) coupled to the second terminal of the fourth transistor (M61) and a cathode providing the positive equipment voltage (+VP2);
a fifth transistor (M62), having a first terminal, a control terminal, and a second terminal coupled to the ground voltage (SGND);
a twentieth resistor (R62), coupled between the control terminal of the fourth transistor (M61) and the first terminal of the fifth transistor (M62);
a twenty-first resistor (R63), coupled between the supply target signal (SupplyTarget) and the control terminal of the fifth transistor (M62);
a fourteenth capacitor (C64), coupled between the control terminal of the fifth transistor (M62) and the second terminal of the fifth transistor (M62);
a sixth transistor (M63), having a first terminal, a control terminal, and a second terminal coupled to the ground voltage (SGND);
a twenty-second resistor (R64), coupled between the supply target signal (SupplyTarget) and the control terminal of the sixth transistor (M63);
a twenty-third resistor (R65), coupled between the output voltage (VPout) and the first terminal of the sixth transistor (M63);
a fifteenth capacitor (C65), coupled between the control terminal of the sixth transistor (M63) and the second terminal of the sixth transistor (M63);
a seventh transistor (M64), having a first terminal configured to receive the output voltage (VPout), a control terminal, and a second terminal providing the pilot voltage (+CP_VP);
a twenty-fourth resistor (R66), coupled between the first terminal of the seventh transistor (M64) and the control terminal of the seventh transistor (M64);
a sixteenth capacitor (C66), coupled between the second terminal of the seventh transistor (M64) and the ground voltage (SGND); and
an eighth transistor (M65), having a first terminal coupled to the control terminal of the seventh transistor (M64), a control terminal coupled to the first terminal of the sixth transistor (M63), and a second terminal coupled to the ground voltage (SGND).

13. The electric vehicle power supply equipment (100) according to claim 12, wherein the auxiliary discharge circuit (180, 180a) comprises:
a buck-boost circuit chip (181), having a current limiting sensing input terminal (IPK), an internal voltage regulation output terminal (VCCO) coupled to the anode (A_D61) of the third diode (D61), a second voltage comparison terminal (COMP), an internal switch collector terminal (SWC) coupled to the current limiting sensing input terminal (IPK), an internal switch emitter terminal (SWE), and a timing capacitor terminal (TCAP);
a seventeenth capacitor (C71), coupled between the anode (A_D61) of the third diode (D61) and the ground voltage (SGND);
a twenty-fifth resistor (R71), coupled between the anode (A_D61) of the third diode (D61) and the current limiting sensing input terminal (IPK);
a twenty-sixth resistor (R72), coupled between the second voltage comparison terminal (COMP) and the ground voltage (SGND);
a twenty-seventh resistor (R73), coupled between the second voltage comparison terminal (COMP) and the negative equipment voltage (-VP2);
an eighteenth capacitor (C72), coupled between the timing capacitor terminal (TCAP) and the negative equipment voltage (-VP2);
a fourth inductor (L71), coupled between the internal switch emitter terminal (SWE) and the ground voltage (SGND);
a fourth diode (D71), having an anode coupled to the negative equipment voltage (-VP2) and a cathode coupled to the internal switch emitter terminal (SWE); and
a nineteenth capacitor (C73), coupled between the negative equipment voltage (-VP2) and the ground voltage (SGND).

14. The electric vehicle power supply equipment (100) according to claim 1, further comprising a monitoring circuit (190, 190a), coupled to the battery (140) and the control circuit (120, 120a), and configured to monitor a battery voltage (BAT_VP), a charge-discharge current, a battery temperature, a battery capacity, and a battery health status information of the battery (140), wherein when the battery health status information indicates a low health status of the battery (140), the battery health status information is transmitted to the protection circuit (110) through the control circuit (120, 120a) to send a battery warning signal (BAT_Alt) through the protection circuit (110),
wherein the battery capacity and the battery health status information are calculated based on the battery voltage (BAT_VP), the charge-discharge current, and the battery temperature.

15. The electric vehicle power supply equipment (100) according to claim 14, wherein the monitoring circuit (190, 190a) is configured to transmit the battery health status information to the control circuit (120, 120a) through a first serial communication signal (SXE1), and the control circuit (120, 120a) is configured to transmit the battery health status information to the protection circuit (110) through a second serial communication signal (SXE2).

16. The electric vehicle power supply equipment (100) according to claim 15, wherein the first serial communication signal (SXE1) comprises an inter-integrated circuit signal, and the second serial communication signal (SXE2) comprises a universal asynchronous receiver-transmitter signal.

17. The electric vehicle power supply equipment (100) according to claim 16, wherein the control circuit (120, 120a) comprises:
a microcontroller (121), having a first input/output terminal (MCLR/VPP/RA3) configured to receive an external reset signal (MCLR), a second input/output terminal (RA4) configured to provide a virtual load signal (Dummy), a third input/output terminal (MCLR/VPP/RA3) configured to provide a bootstrap current limiting signal (Boost_ILMT), a fourth input/output terminal (RB4) coupled to a serial data signal (I2C1DAT) of the inter-integrated circuit signal, a fifth input/output terminal (RB5) configured to provide the supply target signal (SupplyTarget), a sixth input/output terminal (RB6) coupled to a serial clock signal (I2C1CLK) of the inter-integrated circuit signal, a seventh input/output terminal (RB7) configured to provide the charging control signal (Charge), an eighth input/output terminal (RC0), a ninth input/output terminal (RC1) configured to receive the power failure indication signal (Blackout), a tenth input/output terminal (RC2) configured to provide the discharge control signal (Discharge), an eleventh input/output terminal (RC3), a twelfth input/output terminal (RC4), a thirteenth input/output terminal (RC5), a fourteenth input/output terminal (RC6), and a fifteenth input/output terminal (RC7);
a twenty-eighth resistor (R81), coupled between a transmission signal (UART_TX) of the universal asynchronous receiver-transmitter signal and the thirteenth input/output terminal (RC5);
a twenty-ninth resistor (R82), coupled between a battery voltage signal (BAT_Voltage) and the twelfth input/output terminal (RC4);
a twentieth capacitor (C81), coupled between the twelfth input/output terminal (RC4) and a ground voltage (SGND);
a thirtieth resistor (R83), coupled between a received signal (UART_RX) of the universal asynchronous receiver-transmitter signal and the eleventh input/output terminal (RC3);
a thirty-first resistor (R84), coupled between a pilot signal (CP_ADC) transmitting the pilot information and the fourteenth input/output terminal (RC6);
a twenty-first capacitor (C82), coupled between the fourteenth input/output terminal (RC6) and the ground voltage (SGND);
a thirty-second resistor (R85), coupled between an internal voltage regulation power supply voltage (REG_VP) and the fifteenth input/output terminal (RC7);
a thirty-third resistor (R86), coupled between the fifteenth input/output terminal (RC7) and the ground voltage (SGND);
a twenty-second capacitor (C83), coupled between the fifteenth input/output terminal (RC7) and the ground voltage (SGND);
a thirty-fourth resistor (R89), coupled between the eighth input/output terminal (RC0) and a battery temperature signal (BAT_TEMP);
a twenty-third capacitor (C84), coupled between the eighth input/output terminal (RC0) and the ground voltage (SGND);
a thirty-fifth resistor (R8a), coupled between the tenth input/output terminal (RC2) and the ground voltage (SGND); and
a thirty-sixth resistor (R8b), coupled between the fifth input/output terminal (RB5) and the ground voltage (SGND).

18. The electric vehicle power supply equipment (100) according to claim 17, wherein the monitoring circuit (190, 190a) comprises:
a measurement chip (191), having a battery connection terminal (BAT), a chip enable terminal (CE) configured to receive a circuit power supply voltage (VPcc), an internal voltage regulation input terminal (REGIN) configured to receive the circuit power supply voltage (VPcc), an internal voltage regulation output terminal (REG25) configured to provide the internal voltage regulation power supply voltage (REG_VP), a serial data terminal (P3/SDA) coupled to the serial data signal (I2C1DAT), a serial clock terminal (P4/SCL) coupled to the serial clock signal (I2C1CLK), a temperature sensing terminal (P6/TS), a negative analog input terminal (SRN), a positive analog input terminal (SRP), and a chip ground terminal (VSS);
a thirty-seventh resistor (R93), coupled between the positive battery terminal (+VBAT) and the battery connection terminal (BAT);
a twenty-fourth capacitor (C91), coupled between the internal voltage regulation input terminal (REGIN) and a measurement ground voltage (Gauge_GND);
a twenty-fifth capacitor (C92), coupled between the internal voltage regulation output terminal (REG25) and the measurement ground voltage (Gauge_GND);
a thirty-eighth resistor (R94), coupled between the circuit power supply voltage (VPcc) and the serial data terminal (P3/SDA);
a thirty-ninth resistor (R95), coupled between the circuit power supply voltage (VPcc) and the serial clock terminal (P4/SCL);
a fortieth resistor (R96), coupled between the temperature sensing terminal (P6/TS) and the battery temperature signal (BAT_TEMP);
a twenty-sixth capacitor (C93), coupled between the negative analog input terminal (SRN) and the positive analog input terminal (SRP);
a twenty-seventh capacitor (C94), coupled between the negative analog input terminal (SRN) and a ground voltage (SGND);
a twenty-eighth capacitor (C95), coupled between the positive analog input terminal (SRP) and the ground voltage (SGND);
a forty-first resistor (R97), coupled between the negative analog input terminal (SRN) and the ground voltage (SGND);
a forty-second resistor (R98), coupled between the ground voltage (SGND) and the negative battery terminal (-VBAT);
a forty-third resistor (R99), coupled between the positive analog input terminal (SRP) and the negative battery terminal (-VBAT); and
a forty-fourth resistor (R9a), coupled between the chip ground terminal (VSS) and the negative battery terminal (-VBAT).

19. A battery backup method for an electric vehicle power supply equipment (100), comprising:
providing a power failure indication signal (Blackout) through a protection circuit (110) of the electric vehicle power supply equipment (100) based on a positive charging voltage (+VP1) and a negative charging voltage (-VP1);
providing a discharge control signal (Discharge) through a control circuit (120, 120a) of the electric vehicle power supply equipment (100) based on the power failure indication signal (Blackout) and a pilot information;
converting a battery voltage (BAT_VP) of a battery (140) into an output voltage (VPout) through a discharge circuit (160, 160a) of the electric vehicle power supply equipment (100) based on the discharge control signal (Discharge), the discharge circuit (160, 160a) being coupled to the battery (140);
providing the output voltage (VPout) to an output path as a pilot voltage (+CP_VP) or to a communication circuit as a positive equipment voltage (+VP2) through an output switching circuit (170, 170a) of the electric vehicle power supply equipment (100) based on a supply target signal (SupplyTarget) from the control circuit (120, 120a);
determining whether a charging gun (Gev) is connected to an electric vehicle (CARev) based on the pilot voltage (+CP_VP) through a control pilot circuit (150) of the electric vehicle power supply equipment (100) to provide the pilot information; and
providing a negative equipment voltage (-VP2) based on the positive equipment voltage (+VP2) through an auxiliary discharge circuit (180, 180a) of the electric vehicle power supply equipment (100),
wherein the positive charging voltage (+VP1) and the negative charging voltage (-VP1) are received from a power supply conversion circuit (10) or the connected electric vehicle (CARev).

20. The battery backup method according to claim 19, wherein the output switching circuit (170, 170a) provides the output voltage (VPout) as the pilot voltage (+CP_VP) by default based on the supply target signal (SupplyTarget).

21. The battery backup method according to claim 20, wherein when the pilot voltage (+CP_VP) drops from a power level to a predetermined level, through the control pilot circuit (150), the charging gun (Gev) is determined to be connected to the electric vehicle (CARev), and when the pilot voltage (+CP_VP) remains at the power level, through the control pilot circuit (150), the charging gun (Gev) is determined to be not connected to the electric vehicle (CARev).

22. The battery backup method according to claim 19, further comprising:
providing a charging control signal (Charge) through the control circuit (120, 120a) based on the power failure indication signal (Blackout); and
receiving the charging control signal (Charge) and the positive charging voltage (+VP1) through a charging circuit (130, 130a) of the electric vehicle power supply equipment (100) to charge the battery (140) using the positive charging voltage (+VP1) based on the charging control signal (Charge).

23. The battery backup method according to claim 22, wherein providing the discharge control signal (Discharge) based on the power failure indication signal (Blackout) comprises:
when the power failure indication signal (Blackout) indicates that the protection circuit (110) does not receive the positive charging voltage (+VP1) and the negative charging voltage (-VP1),
providing the discharge control signal (Discharge) through the control circuit (120, 120a), and
wherein providing the charging control signal (Charge) based on the power failure indication signal (Blackout) comprises: when the power failure indication signal (Blackout) indicates that the protection circuit (110) receives the positive charging voltage (+VP1) and the negative charging voltage (-VP1), providing the charging control signal (Charge) through the control circuit (120, 120a).

24. The battery backup method according to claim 19, further comprising:
monitoring a battery voltage (BAT_VP), a charge-discharge current, a battery temperature, a battery capacity, and a battery health status information of the battery (140) through a monitoring circuit (190, 190a) of the electric vehicle power supply equipment (100); and
when the battery health status information indicates a low health status of the battery (140), the battery health status information is transmitted to the protection circuit (110) through the control circuit (120, 120a) to send a battery warning signal (BAT_Alt) through the protection circuit (110) to at least one of a user device and the electric vehicle (CARev),
wherein the battery capacity and the battery health status information are calculated based on the battery voltage (BAT_VP), the charge-discharge current, and the battery temperature.

25. The battery backup method according to claim 24, wherein the monitoring circuit (190, 190a) transmits the battery health status information to the control circuit (120, 120a) through a first serial communication signal (SXE1), and the control circuit (120, 120a) transmits the battery health status information to the protection circuit (110) through a second serial communication signal (SXE2).

26. The battery backup method according to claim 25, wherein the first serial communication signal (SXE1) comprises an inter-integrated circuit signal, and the second serial communication signal (SXE2) comprises a universal asynchronous receiver-transmitter signal.
